# EUROPÄISCHE PATENTANMELDUNG

(11) **EP 4 782 707 A1**
(43) Veröffentlichungstag der Anmeldung: **29.07.2026**
(21) Anmeldenummer: 26154025.6
(22) Anmeldetag: 26.01.2026
(51) Int. Cl.: F16B 13/06

(54) **ERDUNGSANKER ZUM EINSETZEN IN ARMIERTEN STAHLBETON UND VERFAHREN ZUM MONTIEREN EINES ERDUNGSANKERS**

(30) Priorität: 27.01.2025 DE 202025100403 U; 24.07.2025 DE 102025129220
(71) Anmelder: Scholand, Markus, 33181 Bad Wünnenberg (DE)
(72) Erfinder: Scholand, Markus, 33181 Bad Wünnenberg (DE)
(74) Vertreter: Göring, Jan

(57) **Zusammenfassung**

Ein Erdungsanker (1) zum Einsetzen in armierten Stahlbeton (2), umfasst einen Stab (3), der eine Axialrichtung (A) definiert, eine den Stab (3) radial zur Axialrichtung (A) umgebende Spannhülse (7) mit einem Schlitz (71), der sich in der Axialrichtung (A) durch die Spannhülse (7) erstreckt, und einen an dem Stab (3) befestigten oder befestigbaren Spreizkörper (5) zum radialen Aufspreizen der Spannhülse (7).

## Beschreibung

### TECHNISCHER BEREICH

Die vorliegende Offenbarung bezieht sich auf einen Erdungsanker zum Einsetzen in armierten Stahlbeton. Die Offenbarung betrifft auch ein Verfahren zum Montieren eines Erdungsankers. Insbesondere betrifft die Offenbarung einen Erdungsanker, der einen Stab, eine radial um den Stab angeordnete Spannhülse mit einem axialen Schlitz und einen Spreizkörper zum radialen Aufspreizen der Spannhülse umfasst.

### HINTERGRUND

In der modernen Bauindustrie ist die Gewährleistung der elektromagnetischen Verträglichkeit und des Blitzschutzes von zweckmäßiger Bedeutung, insbesondere in sensiblen Bereichen wie Rechenzentren und Industrieanlagen. Erdungsanker, auch bekannt als Blitzschutzanker, spielen eine wesentliche Rolle bei der Sicherstellung eines effektiven Blitzschutzes und eines zuverlässigen Potentialausgleichs. Diese Systeme sind zweckmäßig, um die Sicherheit von Gebäuden und deren elektrischen Anlagen zu gewährleisten, indem sie Blitzströme sicher in die Erde ableiten und so Schäden an der Infrastruktur und den darin befindlichen Geräten verhindern.

Bekannte Systeme im Bereich der Erdungsanker umfassen typischerweise Konstruktionen, die in Betonstrukturen eingebettet werden, um eine stabile und dauerhafte Verbindung zur Erde zu gewährleisten. Diese Systeme bestehen oft aus einem metallischen Stab oder einer Stange, die in den Beton eingelassen wird, um eine direkte Verbindung zur Erdungsebene herzustellen. Ein häufiger Ansatz ist die Verwendung von mechanischen Verbindungen, die durch Reibung oder Formschluss im Beton verankert werden. Diese traditionellen Systeme sind jedoch oft mit Herausforderungen verbunden, insbesondere wenn es um die Anpassung an bestehende Bauwerke geht, die nachträglich mit Blitzschutzmaßnahmen ausgestattet werden müssen. Moderne Systeme sollen Freistemmen und ein anschließendes Vergießen der Betonfläche vermeiden.

Dabei gibt es weiterhin Herausforderungen, insbesondere in Bezug auf die Installationseffizienz und die Anpassungsfähigkeit an bestehende Strukturen. Bei Sanierungen oder der Nachrüstung von Blitzschutzsystemen in Bestandsgebäuden ist es oft schwierig, bestehende Erdungsanker effektiv zu integrieren, ohne umfangreiche bauliche Veränderungen vornehmen zu müssen. Ein weiteres Problem besteht in der Sicherstellung eines zuverlässigen und dauerhaften Kontakts zwischen dem Erdungsanker und der umgebenden Betonstruktur. Die mechanische Stabilität und die elektrische Leitfähigkeit müssen über die gesamte Lebensdauer des Gebäudes gewährleistet sein, um die Sicherheit und Funktionalität der Blitzschutzsysteme zu garantieren. Bekannte Systeme erfordern häufig aufwendige Installationsprozesse.

Bei manchen bekannten Verfahren zur elektrischen Kontaktierung von Metallarmierungen in Beton wird ein bis zur Metallarmierung verlaufendes Bohrloch im Beton hergestellt und sodann im Bohrloch eine Gewindestange mittels eines Spreizdübels verankert und bis zur elektrisch leitenden Kontaktierung mit der Metallarmierung eingeschraubt. Erfahrungsgemäß ist diese Art der Montage Fehleranfällig und mitunter nicht Dauerbeständig. Zum einen besteht ein Risiko, dass die Metallarmierung entweder bereits bei der Montage nicht korrekt kontaktiert wird, wenn die Gewindestange nicht hinreichend tief in das Loch eingesetzt wird, wenn der Einschraubwiderstand den Monteur zu der Fehlannahme veranlasst hat, die Stange sei bereits bis zum Anschlag eingeschraubt. Selbst bei korrekter Installation kann sich der Anker lösen, etwa infolge einer Alterung oder Setzungserscheinungen des Spreizdübels.

Anstelle eines Spreizdübels verwenden manche Monteure aufwändig gefertigte Systeme mit einem Spannkopf und einem hohlzylindrischen Ankerbolzen, der aus einem langen Hinterteil und einem kronenförmigen Vorderteil besteht. Das kronenförmige Vorderteil umfasst mehrere durch Kerben voneinander getrennte Verankerungslippen. Die Verankerungslippen haben eine komplexe Gestalt. Sie sind an dem Hinterteil mit Festkörpergelenken gehalten, welche unter den aufgebrachten Spannkräften mitunter abbrechen. Ausgehend vom Hinterteil stehen die Verankerungslippen ab und verjüngen sich zunächst, um sich nach einer Schmalstelle wieder aufzuweiten. Auch die Schmalstelle kann brechen oder sich nach innen biegen, sodass die vordere Aufweitung keine wirksame Verankerung in der Betonwand erreicht. Der Fertigungs- und Materialaufwand ist hoch. Die schmalen Abschnitte der Verankerungslippen sind anfällig für Schäden infolge von Korrosion.

Es ist ein der vorliegenden Erfindung zugrunde liegendes technisches Problem, ein verbessertes System für Erdungsanker bereitzustellen, das die Nachteile bekannter Systeme zumindest teilweise überwindet.

### ZUSAMMENFASSUNG

Es ist ein Ziel der vorliegenden Erfindung, einen verbesserten Erdungsanker bereitzustellen. Der verbesserte Erdungsanker soll eine einfache, sichere, stabile und dauerbeständige Befestigung in armiertem Stahlbeton ermöglichen. Der verbesserte Erdungsanker soll geringe Fertigungskosten und einen geringen Fertigungsaufwand aufweisen.

Erfindungsgemäß umfasst der Erdungsanker einen Stab, der eine Axialrichtung definiert. Eine Spannhülse umgibt den Stab radial zur Axialrichtung und weist einen Schlitz auf, der sich in der Axialrichtung durch die Spannhülse erstreckt. Ein Spreizkörper ist an dem Stab befestigt oder kann daran befestigt werden, um die Spannhülse radial aufzuspreizen.

Gemäß dem ersten Aspekt der Erfindung durchdringt der Schlitz die Spannhülse in der Axialrichtung vollständig. Ein Vorteil dieser Konstruktion ist eine sichere Verankerung im armierten Stahlbeton, bei besonders einfachem Aufbau da der vollständig durchdringende Schlitz eine einfache und gleichmäßige Aufspreizung der Spannhülse ermöglicht. Dies führt zu einer stabilen und sicheren Befestigung, die für verschiedene Anwendungen im Bereich der Elektrotechnik und des Blitzschutzes geeignet ist. Eine Spannhülse mit einem axial durchgehenden Schlitz ist einfacher herstellbar und weniger anfällig für Korrosion und Bruchschäden als ein Spreizdübel oder Ankerbolzen mit kronenförmiger Spitze.

Gemäß der Erfindung umfasst der Erdungsanker einen Stab, der eine Axialrichtung definiert, und eine Spannhülse, die den Stab radial zur Axialrichtung umgibt. Die Spannhülse weist gemäß dem zweiten Aspekt der Erfindung einen Schlitz auf, der sich in der Axialrichtung durch die Spannhülse erstreckt. Der Schlitz kann sich in der Axialrichtung durch wenigstens 50%, insbesondere wenigstens 75%, vorzugsweise wenigstens 90%, besonders bevorzugt wenigstens 95% der axialen Länge der Spannhülse erstrecken. Besonders bevorzugt können der erste und der zweite Aspekt der Erfindung miteinander kombiniert sein. Zusätzlich ist ein Spreizkörper vorgesehen, der an dem Stab befestigt ist oder befestigt werden kann und dazu dient, die Spannhülse radial aufzuspreizen. Die Konstruktion der Spannhülse mit genau einen Schlitz erlaubt besonders einfache, eine gleichmäßige und kontrollierte Ausdehnung der Hülse und gewährleistet somit eine stabile Verankerung im armierten Stahlbeton. Eine Spannhülse mit einem einzigen axialen Schlitz ist viel einfacher herstellbar als ein Ankerbolzen, an dessen Spitze eine Vielzahl komplex geformter und durch zahlreiche Kerben voneinander getrennte Lippen angeordnet sind. Ferner ist eine Spannhülse, die mit nur einem einzigen axialen Schlitz besonders widerstandsfähig gegen ungewollte Deformationen und Bruchschäden und dennoch leicht zum Aufspreizen verformbar.

Eine teilringförmige Spannhülse kann relativ zu der Axialrichtung einen Umfangswinkel von wenigstens 180° messen. Insbesondere beschreibt die Spannhülse relativ zu der Axialrichtung einen Umfangswinkel von wenigstens 200°, vorzugsweise wenigstens 270°, besonders bevorzugt wenigstens 300° oder wenigstens 330°. Eine teilringförmige Spannhülse mit einem Schlitz, der nicht parallel zu der Axialrichtung verläuft (beispielsweise spiralförmig) kann in der Draufsicht einen Umfangswinkel von 360° beschreiben. Eine Spannhülse mit nur einem axialen Schlitz kann eine oder mehrere Sollbruchverbindungen zwischen den gegenüberliegenden Umfangsenden der Spannhülse aufweisen, die zumindest im Vormontagezustand eine vollständige axiale Durchdringung der Spannhülse unterbrechen.

Nach einem dritten Aspekt der Erfindung umfasst der Erdungsanker, der für den Einsatz in armierten Stahlbeton konzipiert ist, eine Spannhülse, die den Stab radial zur Axialrichtung umgibt und mit einem Schlitz versehen ist, der sich in der Axialrichtung erstreckt. Gemäß dem dritten Aspekt der Erfindung ist wenigstens ein Radialvorsprung vorgesehen, der sich entlang des Außenumfangs der Spannhülse erstreckt und einen Bogenwinkel von mindestens 90 Grad um die Axialrichtung aufspannt. Insbesondere kann der Bogenwinkel mindestens 120°, vorzugsweise mindestens 135°, besonders bevorzugt wenigstens 160° betragen. Es kann bevorzugt sein, dass der wenigstens eine Bogenwinkel nicht mehr als 180° beträgt. Alternativ oder zusätzlich kann in Umfangsrichtung neben wenigstens einem ersten Radialvorsprung mit einen Bogenwinkel von mindestens 90 Grad ein zweiter Radialvorsprung sowie gegebenenfalls weitere Radialvorsprünge angeordnet sein. Bevorzugt haben der zweite und/oder der eventuelle weitere Radialvorsprung einen Bogenwinkel von mindestens 90 Grad. Der wenigstens eine Radialvorsprung ist so gestaltet, dass er beim Einsetzen in den Stahlbeton effektiv in diesen eingreifen, was die Verankerung des Erdungsankers im Beton verbessert. Der Vorteil eines solchen Designs ist eine erhöhte Stabilität und Festigkeit der Verankerung, da der wenigstens eine Radialvorsprung eine größere Kontaktfläche mit dem Beton bieten und dadurch eine bessere Lastverteilung ermöglichen. Der wenigstens eine Radialvorsprung ist einfach herstellbar und bruchsicher. Diese Ausführungsform erleichtert das Fixieren des Ankers im Beton, da wenigstens eine Radialvorsprung eine mechanische Verzahnung mit dem Beton schafft, die das Herausziehen oder Verrutschen des Ankers verhindert. Ein weiterer Vorteil ist die erhöhte Sicherheit und Zuverlässigkeit der Erdung, da der wenigstens eine Radialvorsprung eine stabile Fixierung gewährleistet, die den Anforderungen an Blitzschutz- und Potentialausgleichsmaßnahmen entspricht. Die Spannhülse mit dem Radialvorsprüngen ist so konzipiert, dass sie sich beim Anziehen des Spreizkörpers radial aufspreizt, damit der wenigstens eine Radialvorsprung besonders fest in den Beton eingreift. Diese mechanische Interaktion zwischen Spannhülse, wenigstens einem Radialvorsprung und Beton sorgt für eine dauerhafte und stabile Verankerung, die insbesondere bei Anwendungen im Bereich der elektromagnetischen Verträglichkeit und des Blitzschutzes von Bedeutung ist. Die ununterbrochene Ausdehnung des wenigstens eine Radialvorsprungs über einen Bogenwinkel von mindestens 90 Grad gewährleistet, dass der Anker in mehrere Richtungen gleichzeitig stabilisiert wird, was die Gesamtstabilität des Systems erhöht. Diese Konstruktion ist besonders vorteilhaft in Situationen, in denen der Anker hohen Zug- oder Scherkräften ausgesetzt ist, da die Radialvorsprünge eine zusätzliche Sicherungsebene bieten. Die Verwendung von Radialvorsprüngen in dieser Weise stellt eine signifikante Verbesserung gegenüber herkömmlichen Erdungsankern dar, die oft nur auf die Reibung zwischen Spannhülse und Beton angewiesen sind, um eine sichere Verankerung zu gewährleisten.

Der wenigstens eine Radialvorsprung, insbesondere der vorderste der mehreren Radialvorsprünge, kann unmittelbar an der in Axialrichtung vorderen Kante der Spannhülse angeordnet sein. Der wenigstens eine Radialvorsprung kann am der Stahlbewehrung und/oder dem Spreizkörper zuzuwendenden Ende der Spannhülse angeordnet sein. Zwischen dem wenigstens einen Radialvorsprung, insbesondere dem hintersten der mehreren Radialvorsprünge, und der der in Axialrichtung hinteren Kante der Spannhülse kann ein Abstand vorgesehen sein. Bei einer Spannhülse mit mehreren Radialvorsprüngen können die Radialvorsprünge in der Axialrichtung gelichmäßig verteilt, insbesondere äquidistant, angeordnet sein.

Der Erdungsanker kann eine Spannhülse mit wenigstens einem Radialvorsprung aufweisen, der sich kontinuierlich und nur vom Schlitz durchbrochen entlang des Außenumfangs der Spannhülse erstreckt. Der Radialvorsprung ist ein hervorstehendes Element auf der äußeren Oberfläche der Spannhülse, das sich in einer radialen Richtung von der Achse des Stabs erstreckt. Der Schlitz, der sich in der Axialrichtung durch die Spannhülse erstreckt, unterbricht den Radialvorsprung, wodurch eine im Übrigen ringförmig durchgehende (teilringförmig) Haltestruktur gebildet ist. Diese Konfiguration ermöglicht eine verbesserte mechanische Interaktion zwischen der Spannhülse und dem umgebenden Beton, indem sie eine große Kontaktfläche zur sicheren Verankerung bietet. Der kontinuierliche Radialvorsprung sorgt dafür, dass die Spannhülse beim Einsetzen und Spannen im Bohrloch gleichmäßig expandiert, was zu einer stabileren und sichereren Befestigung führt. Der kontinuierliche Radialvorsprung erlaubt einen gleichmäßigen Umfangseingriff der Spannhülse in innere Umfangswand der Bohrung. Der Schlitz stellt eine gewisse Flexibilität für die Spannhülse bereit, was das Aufweiten und im Bohrloch erleichtert. Diese Merkmale tragen dazu bei, dass der Erdungsanker eine zuverlässige und dauerhafte Verbindung im armierten Stahlbeton ermöglicht, was insbesondere bei Anwendungen im Bereich des Blitzschutzes und der elektromagnetischen Verträglichkeit von Vorteil ist. Durch die kontinuierliche Struktur des Radialvorsprungs wird zudem die Lastverteilung auf die Spannhülse optimiert, was die mechanische Belastbarkeit und die Lebensdauer des Erdungsankers erhöht. Die Gestaltung des Radialvorsprungs ermöglicht eine einfache und effiziente Montage, da die Spannhülse beim Spannen gleichmäßig aufgespreizt wird und sich fest im Bohrloch verankert. Dies reduziert den Kraftaufwand, der für die Installation erforderlich ist, und minimiert das Risiko von Montagefehlern.

Gemäß dem vierten Aspekt der Erfindung weist die Spannhülse weist zwei oder mehr in der Axialrichtung beabstandete Radialvorsprünge zum Eingreifen in den Stahlbeton auf. Der vierte Aspekt der Erfindung kann zweckmäßig mit dem dritten Aspekt der Erfindung oder dessen Ausgestaltung kombiniert sein. Diese mehreren axial beabstandeten Radialvorsprünge erlauben eine besonders sichere Verankerung der Spannhülse im Stahlbeton. Durch die Anordnung der mehreren Radialvorsprünge in der Axialrichtung benachbart zu einander kann eine entlang der axialen Länge der Spannhülse gleichmäßige Verteilung der Haltekräfte erreicht werden. Dies führt zu einer stabilen und sicheren Befestigung des Erdungsankers im Beton. Die Radialvorsprünge greifen in den Beton ein und verhindern ein Zurückziehen oder Verrutschen der Spannhülse. Ein Vorteil dieser Konstruktion ist die erhöhte Stabilität und Festigkeit der Verankerung, da die Radialvorsprünge eine größere Kontaktfläche mit dem Beton bieten und somit eine bessere Kraftübertragung gewährleisten. Zudem kann die Spannhülse durch die Radialvorsprünge besser in unterschiedlichen Betonqualitäten und -dichten sicher verankert werden. Insgesamt bieten die Radialvorsprünge eine verbesserte mechanische Verbindung zwischen der Spannhülse und dem umgebenden Beton, was die Zuverlässigkeit und Langlebigkeit der Erdungsinstallation erhöht.

Nach einer Ausführungsform umfasst der Erdungsanker eine Spannhülse, die genau zwei, genau drei oder genau vier in der Axialrichtung beabstandete Radialvorsprünge aufweist. Diese Radialvorsprünge sind Erhebungen oder Vorsprünge, die sich radial von der Spannhülse nach außen erstrecken und entlang der Axialrichtung des Stabs angeordnet sind. Durch die beabstandete Anordnung der Radialvorsprünge entlang der Axialrichtung wird eine gleichmäßige Verteilung der Kräfte gewährleistet, die auf die Spannhülse wirken, wenn der Erdungsanker installiert und gespannt wird. Dies führt zu einer verbesserten Haftung und einer höheren Widerstandsfähigkeit gegen Zug- und Scherkräfte, die auf den Erdungsanker einwirken können. Ein Vorteil der genauen Anzahl von zwei oder drei Radialvorsprüngen ist die Optimierung der Verankerungseigenschaften, ohne die Komplexität und die Herstellungskosten der Spannhülse unnötig zu erhöhen. Eine besonders vorteilhafte Ausführung weist genau vier Radialvorsprünge auf. Die Radialvorsprünge können auch dazu beitragen, die Gefahr von Materialversagen oder ungleichmäßiger Belastung zu reduzieren.

Nach einer Ausführungsform umfasst der Erdungsanker wenigstens einen Radialvorsprung, der in der Radialrichtung relativ zu einem Ringkörper einen Vorstand im Bereich von 0,3 mm bis 3 mm, insbesondere im Bereich von 0,5 mm bis 2 mm, vorzugsweise im Bereich von 1 mm bis 1,5 mm, aufweist. Der Radialvorsprung ist ein hervorstehendes Element, das sich radial von der Spannhülse nach außen erstreckt. Durch die Dimensionierung des Radialvorsprungs im angegebenen Bereich wird eine optimale Balance zwischen der mechanischen Festigkeit und der Flexibilität der Spannhülse erreicht. Ein zu großer Vorstand könnte die Spannhülse zu starr machen und das Einsetzen erschweren, während ein zu kleiner Vorstand möglicherweise nicht genügend Halt im Bohrloch bietet.

Nach einer Ausführungsform eines Erdungsankers mit einem oder mehreren Radialvorsprüngen weist der wenigstens einen Radialvorsprung einen Dreiecksquerschnitt auf, insbesondere einen gleichschenkligen Dreiecksquerschnitt und/oder einen rechtwinkligen Dreiecksquerschnitt. Diese Radialvorsprünge sind vorzugsweise integrale Bestandteile der Spannhülse. Der Dreiecksquerschnitt der Radialvorsprünge ermöglicht eine bessere Kraftübertragung und Verteilung, wodurch die Spannhülse besonders fest an der Innenwand des Bohrlochs gehalten sein kann. Ein gleichschenkliger Dreiecksquerschnitt bietet den Vorteil einer symmetrischen Kraftverteilung, was zu einer gleichmäßigen Spannung und Stabilität führt. Ein rechtwinkliger Dreiecksquerschnitt kann eine besonders starke Verankerung bieten, da die rechtwinkligen Kanten sich fest in das umgebende Material eingraben können. Diese geometrischen Formen der Radialvorsprünge tragen dazu bei, dass der Erdungsanker auch bei hohen Belastungen sicher und stabil im Bohrloch verbleibt. Der Radialvorsprung oder die Radialvorsprünge sind vorzugsweise einstückig mit der Spannhülse gebildet. Vorzugsweise sind der Radialvorsprung oder die Radialvorsprünge integraler Bestandteil der Spannhülse. Die Dreiecksspitze eines Radialvorsprungs kann spitz oder abgerundet sein. Der Winkel der Dreiecksspitze kann anhand der zur Dreiecksspitze benachbarten Dreiecksschenkeln definiert sein. Der Dreieckswinkel kann einen Winkel im Bereich von 45° bis 135° aufspannen, insbesondere im Bereich von 60° bis 120°, vorzugsweise im Bereich von 70° bis 110°, besonders bevorzugt im Bereich von 80° bis 100°. Durch die optimierte Form der Radialvorsprünge wird auch die Lebensdauer des Erdungsankers verlängert, da die Spannhülse weniger anfällig für Verschleiß und Beschädigungen ist. Insgesamt bieten diese neuen Merkmale eine verbesserte Funktionalität und Zuverlässigkeit des Erdungsankers, was ihn zu einer effektiven Lösung für die nachträgliche Installation in armiertem Stahlbeton macht.

Nach einer Ausführungsform ist der Erdungsanker so gestaltet, dass der Dreiecksquerschnitt des Radialvorsprungs oder der Radialvorsprünge eine stumpfe Dreiecksspitze aufweist, die in Radialrichtung absteht. Der Dreiecksquerschnitt ist eine Form des Querschnitts des Spreizkörpers, der dazu dient, die Spannhülse radial aufzuspannen, wenn der Spreizkörper in die Spannhülse eingeführt wird. Die stumpfe Dreiecksspitze bedeutet, dass der Winkel an der Spitze des Dreiecks wenigstens 90 Grad oder größer als 90 Grad ist. Diese Gestaltung bringt mehrere Vorteile mit sich. Erstens ermöglicht die stumpfe Spitze eine gleichmäßigere Verteilung der Kräfte auf die Spannhülse, was die Spannhülse effizienter und sicherer in das Bohrloch im armierten Stahlbeton verankert. Zweitens reduziert die stumpfe Spitze das Risiko von Beschädigungen an der Spannhülse oder dem umgebenden Beton, da die Kräfte weniger konzentriert und somit weniger schädlich sind. Drittens erleichtert die stumpfe Spitze die Einführung des Spreizkörpers in die Spannhülse, da sie weniger Widerstand bietet und somit weniger Kraftaufwand beim Einbau erforderlich ist. Dies verbessert die Benutzerfreundlichkeit und Effizienz des Installationsprozesses. Schließlich trägt die stumpfe Spitze zur Langlebigkeit des Erdungsankers bei, da sie die Spannhülse weniger beansprucht und somit deren Lebensdauer verlängert.

Gemäß einem fünften Aspekt der Erfindung ist vorgesehen, dass der Erdungsanker einen Stab umfasst, an einem ersten Ende ein mehrkantiges oder sternförmiges Schraubenmitnahmeprofil aufweist. Der Stab kann ein hinteres Ende oder erstes Ende aufweisen, das dazu ausgelegt ist, in einem Montagezustand des Erdungsankers aus der Bohrung herauszuragen. Der Stab kann ein vorderes Ende oder zweites Ende aufweisen, an dem vorzugsweise der Spreizkörper befestigt ist, welches zum Einsetzen in die Bohrung ausgelegt und eingerichtet ist. Dieses Schraubenmitnahmeprofil am hinteren Ende des Stabs ermöglicht eine verbesserte Drehmomentübertragung und eine sicherere Verbindung während der Installation des Erdungsankers. Das mehrkantige oder sternförmige Schraubenmitnahmeprofil kann eine verbesserte Handhabung beim Einsetzen und Befestigen des Ankers im Bohrloch erlauben. Durch die spezielle Form des Schraubenmitnahmeprofils kann das Drehmoment gleichmäßig und effizient auf den Stab übertragen werden, was das Risiko des Abrutschens oder Überdrehens minimiert und somit die Sicherheit und Zuverlässigkeit der Installation erhöht.

Herkömmliche Erdungsanker sind mitunter mit einer geradlinigen Nut als Mitnahmeprofil ausgestattet, um den Stab mit einem Schlitzschraubendreher zu betätigen. Häufig kann jedoch mit einer solchen geradlinigen Nut nicht genug Kraft oder Drehmoment ausgeübt werden, um den Erdungsanker sicher in der Bohrung zu befestigen, insbesondere falls die Nut nicht ausreichend tief ist. Ferner besteht ein hohes Risiko für Verletzungen oder Beschädigungen im Umfeld des Erdungsankers, weil Schlitzschraubendreher sehr häufig überdrehen und dabei Abrutschen können.

Nach einer Ausführungsform ist der Erdungsanker mit einem mehrkantigen Schraubenmitnahmeprofil ausgestattet, das als Dreikantprofil, Vierkantprofil, Fünfkantprofil oder Sechskantprofil ausgebildet ist. Ein Dreikantprofil, Vierkantprofil, Fünfkantprofil oder Sechskantprofil bietet eine größere Kontaktfläche zwischen dem Werkzeug und dem Erdungsanker, was zu einer besseren Kraftübertragung führt und das Risiko des Abrutschens oder Überdrehens minimiert. Dies ist besonders vorteilhaft, da es die Montage erleichtert und die Gefahr von Verletzungen durch Abrutschen des Werkzeugs verringert.

Nach einer Ausführungsform ist der Erdungsanker mit einem mehrkantigen Schraubenmitnahmeprofil ausgestattet, das konkav ausgebildet ist. Dies bedeutet, dass das Schraubenmitnahmeprofil eine in der Axialrichtung nach innen in den Stab hinein gewölbte Form aufweist. Vorzugsweise erstreckt sich das konkave Schraubenmitnahmeprofil vom hinteren Ende des Stabs in diesen hinein. Das konkave Schraubenmitnahmeprofil kann beispielsweise ein Innendreikantprofil, ein Innenvierkantprofil, ein Innenfünfkantprofil oder ein Innensechskantprofil sein. Das konkave Schraubenmitnahmeprofil ermöglicht eine verbesserte Kraftübertragung und eine sichere Verbindung zwischen dem Erdungsanker und dem Werkzeug, das zum Anziehen oder Lösen des Ankers verwendet wird. Ein Innensechskantprofil ermöglicht die Anwendung eines hohen Drehmoments mit einem entsprechenden Innensechskantschlüssel, was die Installation und Demontage des Erdungsankers erleichtert. Die konkave Form des Profils trägt dazu bei, dass das Werkzeug sicher im Profil sitzt und nicht abrutscht, was die Handhabung des Erdungsankers benutzerfreundlich macht.

Nach einer alternativen Ausführungsform ist der Erdungsanker mit einem mehrkantigen Schraubenmitnahmeprofil ausgestattet, das konvex gestaltet ist. Dies bedeutet, dass das Schraubenmitnahmeprofil eine in der Axialrichtung nach außen von dem Stab herausragende Form aufweist. Vorzugsweise bildet das konvexe Schraubenmitnahmeprofil das hintere Ende des Stabs. Dieses konvexe Schraubenmitnahmeprofil kann als Außendreikantprofil, Außenvierkantprofil, Außenfünfkantprofil oder Außensechskantprofil ausgebildet sein. Durch die konvexe Gestaltung des Profils wird eine große Kontaktfläche zwischen dem Werkzeug und dem Schraubenmitnahmeprofil geschaffen, was zu einer besseren Kraftübertragung und einem sichereren Halt führt.

Nach einer Ausführungsform ist der Erdungsanker mit einem sternförmigen Schraubenmitnahmeprofil ausgestattet, das als Kreuzschlitzantrieb, Innensechsrund oder Außensechsrund ausgebildet ist. Diese n Profile bieten verschiedene Vorteile hinsichtlich der Handhabung und Montage des Erdungsankers. Ein Kreuzschlitzantrieb, auch bekannt als Phillips-Schraubenkopf, ermöglicht eine einfache und schnelle Montage mit einem Kreuzschlitzschraubendreher, der in vielen Werkzeugkästen vorhanden ist. Der Innensechsrund, auch als Torx bekannt, bietet eine erhöhte Drehmomentübertragung und reduziert die Gefahr des Abrutschens oder Überdrehens, was zu einer sichereren und effizienteren Installation führt. Der Außensechsrund, oft als Außentorx bezeichnet, bietet ähnliche Vorteile wie der Innensechsrund, jedoch mit der Möglichkeit, mit einem Steckschlüssel oder einer Nuss verwendet zu werden, was zusätzliche Flexibilität bei der Montage bietet.

Gemäß dem sechsten Aspekt der Erfindung weist der Stab einen äußeren Stabdurchmesser auf, und die Spannhülse in unverformtem Zustand einen äußeren Spannhülsendurchmesser, wobei das Verhältnis vom Stabdurchmesser zum Spannhülsendurchmesser wenigstens 0,60 beträgt. Das Verhältnis vom Stabdurchmesser zum Spannhülsendurchmesser kann insbesondere im Bereich 0,6 bis 0,7 liegen, vorzugsweise im Bereich 0,62 bis 0,67. Diese Ausgestaltung sorgt für eine verbesserte Interaktion zwischen dem Stab und der Spannhülse, indem sie sicherstellt, dass die Spannhülse fest und stabil um den Stab sitzt und eine effektive Kraftübertragung beim Aufspreizen der Spannhülse gewährleistet wird. Der äußere Stabdurchmesser und der äußere Spannhülsendurchmesser sind so aufeinander abgestimmt, dass die Spannhülse beim Einsetzen in das Bohrloch im armierten Stahlbeton optimal aufgespreizt wird, was zu einer sicheren Verankerung führt. Das Verhältnis von mindestens 0,60 zwischen dem Stabdurchmesser und dem Spannhülsendurchmesser stellt sicher, dass die Spannhülse nicht zu dünn ist, was die Gefahr eines Bruchs oder einer unzureichenden Verankerung verringert. Gleichzeitig ist der Stab ausreichend dick, um die erforderliche Stabilität und Festigkeit zu bieten. Diese Konstruktion ermöglicht eine zuverlässige und dauerhafte Erdung, die den Anforderungen der relevanten Normen und Vorschriften entspricht.

Nach einer Ausführungsform weist der Erdungsanker einen Stab auf, der in der Axialrichtung zumindest einen Gewindeabschnitt mit einem Außengewinde besitzt. Das Außengewinde dient als Kommunikationsmechanismus zwischen dem Stab und den weiteren Komponenten des Erdungsankers, insbesondere der Spannhülse und der Konusmutter.

Nach einer Ausführungsform ist der Erdungsanker mit einem Stab ausgestattet, der als Gewindestab ausgeführt ist und sich das Außengewinde entlang seiner vollständigen axialen Länge erstreckt. Der Gewindestab definiert die Axialrichtung des Erdungsankers und ermöglicht eine sichere und stabile Verankerung im armierten Stahlbeton. Das Außengewinde erstreckt sich über die gesamte Länge des Stabs, was bedeutet, dass der Stab über seine gesamte Länge mit einem Gewinde versehen ist. Das das durchgehende Gewinde ermöglicht eine sichere Befestigung von Anbauteilen, die für den Blitzschutz und den Potentialausgleich erforderlich sein können.

Vorzugsweise umfasst der Erdungsanker ein Außengewinde, das als M6-Gewinde oder als M10-Gewinde ausgeführt ist. Ein M6-Gewinde ist besonders geeignet für Anwendungen in ESD-Bereichen (Elektronikfertigung), wo kleine Verbindungen erforderlich sind. Ein M10-Gewinde hingegen wird bevorzugt in der Elektrotechnik nach den Normen VDE 0100-540:2024-06 und/oder EN 62305-3:2011-10 verwendet, insbesondere in Bereichen der elektromagnetischen Verträglichkeit, des Blitzschutzes und der Potentialausgleichsmaßnahmen. Ein Vorteil der Ausführung mit M10-Gewinde ist die erhöhte Stabilität und Blitzstromtragfähigkeit. Für M10-Gewinde gibt es eine Vielzahl von passenden Anbauteilen, was die Montage und Integration in bestehende Systeme erleichtert. Im Gegensatz dazu erfordert die Verwendung von M8-Gewinden häufig improvisierte Lösungen und entspricht nicht immer den Vorgaben der DIN VDE Normen.

Nach manchen Ausführungsformen des Erdungsankers weist der Spreizkörpers ein Innengewinde auf, das komplementär zu einem Außengewinde des Stabs ist. Der Spreizkörper dient dazu, die Spannhülse radial aufzuspannen, um den Erdungsanker fest im armierten Stahlbeton zu verankern. Das Vorhandensein eines komplementären Innengewindes bedeutet, dass der Spreizkörper auf das Außengewinde des Stabs geschraubt werden kann, was eine feste mechanische Verbindung schafft. Ein Vorteil dieser Gewindeverbindung ist die Möglichkeit, den Spreizkörper entlang der Axialrichtung zu positionieren, was eine gleichmäßige Verteilung der Spreizkräfte auf die Spannhülse gewährleistet. Dies führt zu einer optimalen Verankerung im Beton und minimiert das Risiko eines Versagens unter Belastung. Diese Konstruktion bietet auch Vorteile in Bezug auf die Herstellung, da Gewinde, insbesondere Gewindestäbe, einfach maschinell in Serie gefertigt werden können, was die Konsistenz und Qualität des Endprodukts sicherstellt.

Gemäß einer alternativen Ausgestaltung kann der Spreizkörper einstückig mit dem Stab gebildet sein. Stab und Spreizkörper können als ein einziges integrales Bauteil realisiert sein.

Gemäß einer bevorzugten Ausführungsform umfasst der Erdungsanker zum Einsetzen in eine Bohrung im armierten Stahlbeton ferner eine Distanzhülse. Die Distanzhülse umgreift den Stab und weist einen außenumfänglichen Halteabschnitt zum Fixieren der Distanzhülse an einer Wandinnenseite der Bohrung auf. Die Spannhülse ist, insbesondere in der Axialrichtung, zwischen der Distanzhülse und dem Spreizkörper angeordnet. Bei einem Erdungsanker, der eine Mutter umfasst, kann die Distanzhülse, insbesondere in der Axialrichtung, zwischen der Spannhülse und der Mutter angeordnet sein. Der Halteabschnitt kann insbesondere für eine formschlüssige Verbindung mit der Bohrung ausgelegt und eingerichtet sein. Alternativ oder zusätzlich kann der Halteabschnitt für eine Pressverbindung mit der Bohrung ausgelegt und eingerichtet sein. Die axiale Stirnfläche und/oder die axiale Fußfläche der Distanzhülse kann glatt und/oder flach sein. Insbesondere bildet die axiale Stirnfläche und/oder die axiale Fußfläche eine Ebene senkrecht zur Axialrichtung des Erdungsankers. Optional kann der Halteabschnitt eine glatte Außenseite aufweisen. Die Distanzhülse kann symmetrisch, insbesondere spiegelsymmetrisch und/oder rotationssymmetrisch sein, damit ein Verkeilen bei der Montage verhindert wird.

Durch die Verwendung einer derartigen Distanzhülse kann die Montage des Erdungsankers vereinfacht werden. Mithilfe einer an der Wandinnenseite der Bohrung fixierten Distanzhülse kann der Erdungsanker in dem Bohrloch verspannt werden, ohne dass der Benutzer mehrere Werkzeuge benötigt, um einerseits den Stab ortsfest zu halten und andererseits die Spannhülse und den Spreizkörper gegeneinander zu verspannen.

Es kann zweckmäßig sein, dass die Distanzhülse den Stab vollumfänglich umgibt. Es kann bevorzugt sein, dass die Distanzhülse weist eine Durchgangsöffnung für den Stab aufweist. Die Durchgangsöffnung kann sich in der Axialrichtung vollständig durch die Distanzhülse erstrecken. Die Distanzhülse kann eine hohlzylindrische Gestalt haben. Vorzugsweise kann die Distanzhülse über ihre gesamte Längserstreckung einen konstanten Innendurchmesser aufweisen. Der Innendurchmesser der Distanzhülse kann in Bezug auf den Stab gemäß einer Gleit- oder Spielpassung dimensioniert sein. Vorzugsweise ist der Innendurchmesser der Distanzhülse wenigstens so groß wie, insbesondere größer als, der Außendurchmesser, insbesondere die Gewindenennweite, des Stabs. Insbesondere ist der Innendurchmesser der Distanzhülse nicht größer als 150%, vorzugsweise nicht größer als 120%, Besonders bevorzugt nicht kleiner als 110% oder 105% des Außendurchmessers, insbesondere der Gewindenennweite, des Stabs.

Der Halteabschnitt kann für eine Pressverbindung mit dem Bohrloch ausgelegt und eingerichtet sein. Beispielsweise kann eine Distanzhülse für ein Bohrloch mit einem vorbestimmten Bohrlochdurchmesser von 16 mm mit einem Halteabschnitt-Durchmesser von mehr als 16 mm, insbesondere zwischen 16,5 mm und 18 mm, beispielsweise 17 mm, ausgelegt sein. Der vorbestimmte Bohrlochdurchmesser liegt vorzugsweise im Bereich von 4 mm bis 20 mm. Insbesondere liegt der vorbestimmte Bohrlochdurchmesser im Bereich 12 mm bis 20 mm, vorzugsweise im Bereich 14 mm bis 18 mm, besonders bevorzugt im Bereich 15 mm bis 16 mm, beispielsweise bei 15,5 mm. Alternativ kann das vorbestimmte Bohrlochdurchmesser im Bereich 5 mm bis 10 mm, vorzugsweise im Bereich 5,5 mm bis 8 mm, insbesondere bei 6 mm liegen. Der Halteabschnitts-Durchmesser kann insbesondere 1% bis 25%, vorzugsweise 2% bis 15%, besonders bevorzugt 5% bis 10%, größer sein als der vorbestimmte Bohrlochdurchmesser. Der Halteabschnitt-Durchmesser ist insbesondere 20% bis 80%, vorzugsweise 40% bis 70%, besonders bevorzugt 50% bis 60%, größer als der Außendurchmesser des Stabs, insbesondere die Nennweite des Gewindestabs. Der Halteabschnitts-Durchmesser bezeichnet den größten Außendurchmesser des Halteabschnitts. Der Halteabschnitt kann für den Großteil seiner Axialerstreckung in der Axialrichtung, vorzugsweise für die gesamte Axialerstreckung, einen konstanten Außendurchmesser aufweisen. Der Außendurchmesser der Distanzhülse kann insbesondere durch den Außendurchmesser des Vorsprungs, insbesondere der mehreren Vorsprünge, vorzugsweise der Profilierung, definiert sein.

Bei manchen Ausführungsformen kann der Halteabschnitt wenigstens einen in Radialrichtung abstehenden Vorsprung umfassen. Optional kann der Halteabschnitt zwei, drei oder mehr, insbesondere zwischen 10 und 200, vorzugsweise zwischen 20 und 100, in Radialrichtung abstehende Vorsprünge umfassen. Es kann bevorzugt sein, dass der Halteabschnitt eine Profilierung aufweist, die durch eine Vielzahl insbesondere paralleler, kollinearer und/oder koaxialer Vorsprünge gebildet sind. Die Profilierung kann insbesondere Längsrillen und Längsrippen umfassen. Vorzugsweise sind die mehreren Vorsprünge, insbesondere regelmäßig, vorzugsweise gleichförmig, entlang des Außenumfangs der Distanzhülse verteilt angeordnet. Der wenigstens eine Vorsprung erstreckt sich vorzugsweise in der Axialrichtung am Außenumfang der Distanzhülse. Vorzugsweise erstreckt sich der wenigstens eine Vorsprung, insbesondere die mehreren Vorsprünge, geradlinig und/oder achsensparallel am Außenumfang der Distanzhülse. Der Vorsprung oder die Vorsprünge erstrecken sich in der Axialrichtung vollständig über die Längserstreckung des Halteabschnitts. Die axiale Länge des Halteabschnitts kann wenigstens 10%, insbesondere wenigstens 20%, vorzugsweise wenigstens 30% der Gesamtlänge der Distanzhülse (dritte Länge) betragen. Die axiale Länge des Halteabschnitts beträgt vorzugsweise nicht mehr als 90%, insbesondere nicht mehr als 80%, vorzugsweise nicht mehr als 50% der dritten Länge. Der wenigstens eine Vorsprung, insbesondere die mehreren Vorsprünge, vorzugsweise die Profilierung, kann dafür ausgelegt und eingerichtet sein, in der Radialrichtung in die Innenwand des Bohrlochs einzugreifen. Der wenigstens eine Vorsprung, insbesondere die mehreren Vorsprünge, vorzugsweise die Profilierung, kann dafür ausgelegt und eingerichtet sein, eine Drehung der Distanzhülse in der Umfangsrichtung zu verhindern. Zusätzlich oder alternativ kann der wenigstens eine Vorsprung, insbesondere die mehreren Vorsprünge, vorzugsweise die Profilierung für eine geradlinige Führung der Distanzhülse in Axialrichtung in ein Bohrloch ausgelegt und eingerichtet sein. Der Vorsprung bzw. die Profilierung verhindern ein Verdrehen der Distanzhülse im Bohrloch, sodass die Distanzhülse den übrigen Erdungsanker drehfest halten kann.

Zusätzlich oder alternativ zu einem Halteabschnitt kann die Distanzhülse einen Keilabschnitt aufweisen, wobei sich der Außendurchmesser der Distanzhülse in dem Keilabschnitt vergrößert. Vorzugsweise hat der Keilabschnitt eine kegel- oder kegelstumpfförmige Außenseite. Der Keilabschnitt kann zum Einführen der Distanzhülse, insbesondere einer Distanzhülse mit Halteabschnitt, in das Bohrloch ausgelegt und eingerichtet sein. Insbesondere vergrößert sich der Außendurchmesser der Distanzhülse im Keilabschnitt kontinuierlich und/oder stetig. Alternativ oder zusätzlich vergrößert sich der Außendurchmesser der Distanzhülse im Keilabschnitt dergestalt, dass die der Stahlarmierung des Stahlbetons, der Spannhülse und/oder dem Spreizkörper zuzuwendende zweite Seite des Keilabschnitt schmaler ist als eine von der Stahlarmierung, der Spannhülse und/oder dem Spreizkörper abzuwendende erste Seite des Keilabschnitts. Vorzugsweise weist die Distanzhülse genau einen Keilabschnitt auf. Insbesondere beträgt die axiale Länge des Keilabschnitts beträgt nicht mehr als 50%, vorzugsweise nicht mehr als 30%, besonders bevorzugt vorzugsweise nicht mehr als 15%, nicht mehr als 10% oder nicht mehr als 7% der Gesamtlänge der Distanzhülse (dritte Länge). Eine Distanzhülse mit einem Keilabschnitt kann als Keilhülse bezeichnet sein. Die Integration eines Keilabschnitts in die Distanzhülse erleichtert das Einbringen der Distanzhülse in ein Bohrloch.

Es kann bevorzugt ein, dass eine Distanzhülse sowohl einen Keilabschnitt als auch einen Halteabschnitt aufweisen. Vorzugsweise ist der Keilabschnitt an der der Stahlarmierung des Stahlbetons, der Spannhülse und/oder dem Spreizkörper zuzuwendende Seite des Halteabschnitts angeordnet. Der Keilabschnitt kann sich zu dem Halteabschnitt aufweiten. Vorzugsweise entspricht ein Maximaldurchmesser des Keilabschnitts dem Halteabschnitt-Durchmesser. Der Maximaldurchmesser des Keilabschnitts kann in Bezug auf das Bohrloch gemäß einer Presspassung dimensioniert sein. Bevorzugt ist der Maximaldurchmesser des Keilabschnitts größer als das vorbestimmte Bohrlochdurchmesser und der Minimaldurchmesser des Keilabschnitts ist kleiner als das vorbestimmte Bohrlochdurchmesser. Der Minimaldurchmesser des Keilabschnitts kann insbesondere 60% bis 100%, vorzugsweise 80% bis 99%, besonders bevorzugt 90% bis 95%, des vorbestimmten Halteabschnitt-Durchmessers betragen. Der Minimaldurchmesser des Keilabschnitts kann insbesondere 60% bis 100%, vorzugsweise 80% bis 99%, besonders bevorzugt 90% bis 95%, des vorbestimmten Bohrlochdurchmessers betragen. Der Halteabschnitt-Durchmesser ist insbesondere 20% bis 75%, vorzugsweise 30% bis 60%, besonders bevorzugt 40% bis 55%, größer als der Außendurchmesser des Stabs, insbesondere die Nennweite des Gewindestabs. Der Keilabschnitt kann in der Axialrichtung benachbart zum Halteabschnitt angeordnet sein. Der Keilabschnitt kann in der Axialrichtung an den Halteabschnitt, insbesondere überlappungsfrei, angrenzen. Alternativ kann der Keilabschnitt vollständig oder teilweise in der Axialrichtung überlappend mit dem Halteabschnitt gebildet sein. Der Keilabschnitt kann einen Minimaldurchmesser aufweisen, der in Bezug auf das Bohrloch gemäß einer Spiel- oder Gleitpassung dimensioniert ist. Im axialen Bereich des Keilabschnitts kann der Innendurchmesser der Distanzhülse konstant sein.

Optional kann die Distanzhülse einen Zylinderabschnitt aufweisen. Der Zylinderabschnitt kann zum Einführen der Distanzhülse in das Bohrloch ausgelegt und eingerichtet sein. Die Distanzhülse kann insbesondere einen Zylinderabschnitt, einen Keilabschnitt und einen Halteabschnitt aufweisen. Vorzugsweise ist der Zylinderabschnitt an der der Stahlarmierung des Stahlbetons, der Spannhülse und/oder dem Spreizkörper zuzuwendende Seite des Halteabschnitts und/oder des Keilabschnitts angeordnet. Der Maximaldurchmesser des Zylinderabschnitt kann in Bezug auf das Bohrloch gemäß einer Gleit- oder Spielpassung dimensioniert sein. Der Zylinderabschnitt kann in der Axialrichtung benachbart zum Halteabschnitt und/oder dem Keilabschnitt angeordnet sein. Der Zylinderabschnitt kann in der Axialrichtung an den Keilabschnitt, insbesondere überlappungsfrei, angrenzen. Der Zylinderabschnitt kann eine glatte Außenseite aufweisen. Durch die Verwendung eines Zylinderabschnitts kann ein Verkeilen der Distanzhülse beim Einsetzen in das Bohrloch verhindert werden, was das Einbringen der Distanzhülse in ein Bohrloch erleichtert.

Nach einer Ausführungsform umfasst der Erdungsanker eine zu dem Außengewinde komplementäre Mutter und eine in der Axialrichtung zwischen der Spannhülse und der Mutter einsetzbare Distanzhülse.

Die Distanzhülse kann als Glatthülse ausgeführt sein. Der Zylinderabschnitt kann sich über einen Großteil der Längserstreckung der Glatthülse erstrecken, insbesondere wenigstens 80 % der Länge der Distanzhülse, wenigstens 90% oder wenigstens 95%. Die Glatthülse kann im Wesentlichen aus einem Zylinderabschnitt gebildet sein. Der Ein Vorteil ist die Wiederverwendbarkeit der Glatthülse, die als Setzwerkzeug dient und nach dem Spannen entfernt werden kann, was Ressourcen schont und die Effizienz erhöht. Alternativ kann die Glatthülse im Wesentlichen aus einem Halteabschnitt gebildet sein. Der Halteabschnitt kann sich über einen Großteil der Längserstreckung der Glatthülse erstrecken, insbesondere wenigstens 80 % der Länge der Distanzhülse, wenigstens 90% oder wenigstens 95%. Insbesondere weist eine Glatthülse entlang ihrer axialen Längserstreckung einen konstanten Innendurchmesser und einen konstanten Außendurchmesser und/oder eine konstante Wandstärke auf.

Nach einer Ausführungsform ist der Erdungsanker mit einer Spannhülse ausgestattet, die zumindest abschnittsweise mit einem Innenkonus gebildet ist. Der Innenkonus ist vorzugsweise kontinuierlich. Vorzugsweise erstreckt sich der Innenkonus vollumfänglich in der Spannhülse. Der Innenkonus kann die Symmetrieachse des Erdungsankers vollumfänglich (kreisringförmig) umgeben. Vorzugsweise ist der Innenkonus rotationssymmetrisch bezüglich der Symmetrieachse des Erdungsankers. Der Innenkonus kann sich in der Axialrichtung über zumindest einen Teil der Spannhülse erstrecken. Insbesondere erstreckt sich der Innenkonus in der Axialrichtung über wenigstens die Hälfte, vorzugsweise wenigstens drei Viertel, besonders bevorzug wenigstens 90 % der axialen Länge der Spannhülse. Dieser Innenkonus ist so gestaltet, dass er in der Axialrichtung über den Spreizkörper gefahren werden kann. Der Innenkonus innerhalb der Spannhülse ermöglicht eine effiziente und kontrollierte Verankerung des Erdungsankers im armierten Stahlbeton. Der Spreizkörper, der am Stab befestigt ist, sorgt dafür, dass die Spannhülse beim Überfahren des Innenkonus radial aufgespreizt wird. Dies führt zu einer festen Verankerung im Bohrloch, indem die Spannhülse sich gegen die Wände des Bohrlochs und gegebenenfalls hineindrückt. Der Einsatz eines Innenkonus bietet den Vorteil einer gleichmäßigen und kontrollierten Verteilung der Spannkräfte entlang der Spannhülse, was zu einer verbesserten Stabilität und Haltbarkeit der Verankerung führt. Zudem erleichtert der Innenkonus die Installation, da der Spreizkörper durch die konische Form der Spannhülse geführt wird, was eine Positionierung und gleichmäßige Ausdehnung der Hülse gewährleistet. Dies minimiert das Risiko von Beschädigungen am Beton oder an der Spannhülse.

Nach einer Ausführungsform umfasst der Erdungsanker einen Innenkonus, der einen n Innenkonuswinkel im Bereich von 5° bis 15° aufweist, wobei ein bevorzugter Bereich zwischen 10° und 13° liegt und ein besonders bevorzugter Winkel bei 12° liegt. Es kann bevorzugt sein, dass der Innenkonus einen konstanten Innenkonuswinkel aufweist. Der Innenkonus kann dazu dienen, die Spannhülse radial aufzuspannen, um eine feste Verankerung im Bohrloch zu gewährleisten. Der Innenkonuswinkel ist zweckmäßig für die Effizienz und die Stabilität der Verankerung. Ein Innenkonuswinkel im Bereich von 5° bis 15° ermöglicht eine geeignete Balance zwischen der erforderlichen Kraft zum Aufspreizen der Spannhülse und der erzielten Haltekraft im Beton. Ein zu kleiner Winkel würde eine zu hohe Kraft zum Aufspreizen erfordern, während ein zu großer Winkel die Haltekraft verringern könnte. Der bevorzugte Bereich von 10° bis 13° stellt sicher, dass die Spannhülse mit moderatem Kraftaufwand aufgespreizt werden kann und gleichzeitig eine hohe Haltekraft erreicht wird. Ein Innenkonuswinkel von 12° bietet dabei eine besonders günstige Kombination dieser Eigenschaften. Dies ist besonders vorteilhaft, da es die Benutzerfreundlichkeit und Effizienz bei der Installation erhöht, was insbesondere bei nachträglichen Einbauten in bestehende Strukturen von Bedeutung ist.

Nach einer Ausführungsform ist der Erdungsanker so gestaltet, dass der Spreizkörper zumindest abschnittsweise mit einem Außenkonus gebildet ist, der zum Einfahren in die Spannhülse in der Axialrichtung ausgelegt und eingerichtet ist. Der Außenkonus ist vorzugsweise kontinuierlich. Vorzugsweise erstreckt sich der Außenkonus vollumfänglich an dem Spreizkörper. Der Außenkonus kann die Symmetrieachse des Erdungsankers vollumfänglich (kreisringförmig) umgeben. Vorzugsweise ist der Außenkonus rotationssymmetrisch bezüglich der Symmetrieachse des Erdungsankers. Der Außenkonus kann sich in der Axialrichtung über zumindest einen Teil des Spreizkörpers erstrecken. Insbesondere erstreckt sich der Spreizkörper in der Axialrichtung über wenigstens die Hälfte, vorzugsweise wenigstens drei Viertel, besonders bevorzug wenigstens 90 % der axialen Länge des Spreizkörpers.

Der Außenkonus des Spreizkörpers ermöglicht eine effiziente Verteilung der Spreizkräfte auf die Spannhülse, was zu einer verbesserten Verankerung im Bohrloch führt. Der Außenkonus ist so gestaltet, dass er die Spannhülse radial ausdehnt und sie gegen die Wände des Bohrlochs presst. Diese Konstruktion sorgt für eine sichere und stabile Befestigung des Erdungsankers im armierten Stahlbeton. Ein Vorteil dieser Ausführungsform ist die erhöhte Benutzerfreundlichkeit und die Reduzierung des Kraftaufwands beim Einbau des Erdungsankers. Durch die konische Form des Spreizkörpers kann die Spannhülse gleichmäßig und kontrolliert gespreizt werden, was die Montage erleichtert und die Gefahr von Beschädigungen am Bohrloch oder an der Spannhülse minimiert. Durch die Integration des Außenkonus in den Spreizkörper wird die Effizienz des Einbauprozesses vereinfacht, da weniger Zeit und Aufwand für die Installation erforderlich sind. Dies ist besonders vorteilhaft in Situationen, in denen eine schnelle und zuverlässige Erdung erforderlich ist, wie beispielsweise bei der Nachrüstung von Blitzschutzsystemen in bestehenden Gebäuden.

Nach einer Ausführungsform umfasst der Erdungsanker einen Außenkonus, der einen Außenkonuswinkel im Bereich von 5° bis 15° aufweist, wobei der bevorzugte Bereich zwischen 10° und 13° liegt und insbesondere ein Außenkonuswinkel von 12° bevorzugt wird. Es kann bevorzugt sein, dass der Außenkonus einen konstanten Außenkonuswinkel aufweist.

Der Außenkonus kann dazu dienen, die Spannhülse radial aufzuspannen, um eine feste Verankerung im Bohrloch zu gewährleisten. Der Außenkonuswinkel ist zweckmäßig für die Effizienz und die Stabilität der Verankerung. Ein Außenkonuswinkel im Bereich von 5° bis 15° ermöglicht eine geeignete Balance zwischen der erforderlichen Kraft zum Aufspreizen der Spannhülse und der erzielten Haltekraft im Beton. Ein zu kleiner Winkel würde eine zu hohe Kraft zum Aufspreizen erfordern, während ein zu großer Winkel die Haltekraft verringern könnte. Der bevorzugte Bereich von 10° bis 13° stellt sicher, dass die Spannhülse mit moderatem Kraftaufwand aufgespreizt werden kann und gleichzeitig eine hohe Haltekraft erreicht wird. Ein Winkel von 12° bietet dabei eine besonders günstige Kombination dieser Eigenschaften. Der Außenkonuswinkel trägt dazu bei, die Montage des Erdungsankers zu erleichtern und die Sicherheit der Verankerung zu erhöhen. Durch die Abstimmung des Außenkonuswinkels wird die Spannhülse gleichmäßig und kontrolliert aufgespreizt, was zu einer stabilen und dauerhaften Verankerung im armierten Stahlbeton führt.

Vorzugsweise weist der Spreizkörper einen Außenkonus mit einem Außenkonuswinkel und die Spannhülse einen Innenkonus mit einem Innenkonuswinkel auf. Der Außenkonuswinkel und der Innenkonuswinkel sind vorzugsweise aufeinander abgestimmt. Insbesondere ist die Differenz zwischen Außenkonuswinkel und Innenkonuswinkel nicht größer als ±10°, vorzugsweise nicht größer als ±5°, bevorzugt nicht größer als ±2°, besonders bevorzugt nicht größer als ±1°.

Gemäß einer besonders bevorzugten Ausführung gleicht der Außenkonuswinkel dem Innenkonuswinkel. Wenn der Außenkonuswinkel und der Innenkonuswinkel so gestaltet sind, dass sie identisch sind, ermöglicht dies eine einen besonders großen Flächenkontakt zwischen Spannhülse und Spreizkörper und dadurch eine verbesserte Kraftübertragung und Stabilität. Ein Vorteil dieser Konstruktion ist eine erhöhte Benutzerfreundlichkeit bei der Montage, da der gleichmäßige Winkel die Installation erleichtert. Zudem wird durch diese Konstruktion die Verankerung im Bohrloch optimiert, was zu einer zuverlässigeren und sichereren Erdung führt.

Nach einer Ausführungsform des Erdungsankers weist der Spreizkörper und/oder der Außenkonus eine erste Länge auf, während die Spannhülse und/oder der Innenkonus eine zweite Länge aufweist, wobei die zweite Länge größer oder gleich der ersten Länge ist. Insbesondere kann das Verhältnis der zweiten Länge der Spannhülse in Relation zur ersten Länge des Spreizkörpers in der Axialrichtung A kleiner oder gleich 2, insbesondere kleiner oder gleich 1,5, vorzugsweise kleiner oder gleich 1,3, sein. Zusätzlich oder alternativ kann das Verhältnis der zweiten Länge der Spannhülse in Relation zur ersten Länge des Spreizkörpers in der Axialrichtung A kann wenigstens 1, insbesondere wenigstens 1,1, vorzugsweise wenigstens 1,2 betragen. Besonders bevorzugt kann das Verhältnis der zweiten Länge der Spannhülse in Relation zur ersten Länge des Spreizkörpers in der Axialrichtung bei 1,25 liegen. Die größere Länge der Spannhülse ermöglicht es, dass die Spannkräfte über eine größere Fläche verteilt werden, was die Belastbarkeit des Ankers erhöht. Darüber hinaus trägt die größere Länge der Spannhülse zur Erhöhung der Stabilität bei, indem sie eine größere Kontaktfläche mit dem Bohrloch bietet, was die Reibung und damit die Haltekraft erhöht. Die Spannhülse darf jedoch nicht wesentlich länger als der Spreizkörper sein, weil sie ansonsten zu unbeabsichtigten Deformationen neigt.

Zusätzlich oder alternativ kann das Verhältnis der zweiten Länge der Spannhülse in Relation zur Gesamtlänge des Erdungsankers in der Axialrichtung A kleiner als 0,5, insbesondere kleiner als 0,3, vorzugsweise kleiner als 0,25, sein. Zusätzlich oder alternativ kann das Verhältnis der zweiten Länge der Spannhülse in Relation zur Gesamtlänge des Erdungsankers in der Axialrichtung A kann wenigstens 0,1, insbesondere wenigstens 0,1, vorzugsweise wenigstens 0,15, betragen. Die Gesamtlänge des Erdungsankers kann der axialen Länge des Stabs entsprechen. Besonders bevorzugt kann das Verhältnis der zweiten Länge der Spannhülse in Relation zur Gesamtlänge des Erdungsankers 1 in der Axialrichtung A bei 0,2 liegen. Anders als herkömmliche Spreizdübel oder dergleichen kommt die Spannhülse dank ihrer relativ kurzen axialen zweiten Länge mit einem geringen Materialverbrauch aus.

Bei Ausführungen eines Erdungsankers mit Distanzhülse, insbesondere Glatthülse, kann vorgesehen sein, dass die Distanzhülse, insbesondere die Glatthülse, eine dritte Länge in der Axialrichtung aufweist, die wenigstens so groß wie die zweite Länge der Spannhülse ist, vorzugsweise größer ist als die zweite Länge, insbesondere wenigstens 1,5-mal so groß wie die zweite Länge, bevorzugt wenigstens 2-mal so groß wie die zweite Länge. Die dritte Länge ist vorzugsweise kleiner als die Gesamtlänge des Stabs. Die dritte Länge kann insbesondere nicht mehr als 5-mal so groß, vorzugsweise nicht mehr als 3-mal so groß, wie die zweite Länge sein. Die optionale Glatthülse kann, anders als beispielsweise das Hinterteil gebräuchlicher Erdungsanker, nach der Montage aus dem Bohrloch entnommen und wiederverwendet werden.

Nach einer Ausführungsform ist der Erdungsanker mit einer Spannhülse ausgestattet, die speziell dafür ausgelegt und eingerichtet ist, bei einer Verspannung gegen den Spreizkörper in der Axialrichtung eine plastische Verformung in der Radialrichtung zu erfahren. Der Begriff "Spannhülse" bezieht sich auf ein hohlzylindrisches Bauteil, das durch eine axiale Kraft zusammengedrückt wird, um eine radiale Expansion zu erzeugen. Diese Expansion kann zu einer zumindest teilweise plastischen Verformung der Spannhülse führen. Der Spreizkörper, gegen den die Spannhülse verspannt wird, ist ein konisches Element, das die axiale Kraft in eine radiale Kraft umwandelt, um die Expansion der Spannhülse zu bewirken. Diese plastische Verformung in der Radialrichtung sorgt für eine dauerhafte und stabile Verankerung des Erdungsankers im Beton, was besonders wichtig für die langfristige Sicherheit und Zuverlässigkeit der Erdungsinstallation ist. Die Fähigkeit der Spannhülse, sich plastisch zu verformen ermöglicht sie eine gleichmäßige Verteilung der Spannkräfte auf die Innenwände des Bohrlochs, wodurch die Gefahr von Rissen oder Beschädigungen des Betons minimiert wird. Ferner sorgt die plastische Verformung für eine hohe Anpassungsfähigkeit an unterschiedliche Bohrlochdurchmesser und -toleranzen, was die Installation des Erdungsankers in verschiedenen Betonarten und -zuständen erleichtert. Drittens trägt die plastische Verformung zur Erhöhung der Haltekraft des Erdungsankers bei, da die Spannhülse nach der Verformung eine größere Kontaktfläche mit dem Beton hat und dauerhaft beibehält. Diese größere Kontaktfläche führt zu einer verbesserten Lastverteilung und erhöht die Widerstandsfähigkeit des Ankers gegen Zug- und Scherkräfte.

Gemäß einer Besonderheit der Erfindung wird ein Erdungsanker beschrieben, der insbesondere für den nachträglichen Einbau in armierten Stahlbeton entwickelt wurde. Der Erdungsanker umfasst eine Spannhülse, die in einer Bohrung im Stahlbeton eingesetzt wird. Diese Spannhülse kann in Axialrichtung gegen einen Spreizkörper verspannt werden, wobei die Verspannung durch eine Mutter und eine Distanzhülse unterstützt wird. Der Spreizkörper bewirkt eine radiale Aufweitung der Spannhülse gegen die Wandinnenseite der Bohrung. Ein Vorteil ist die Wiederverwendbarkeit der Glatthülse, die als Setzwerkzeug dient und nach dem Spannen entfernt werden kann, was Ressourcen schont und die Effizienz erhöht. Der Einsatz eines Innensechskants ermöglicht zudem eine einfachere und sicherere Montage im Vergleich zu herkömmlichen Methoden.

Nach einer Ausführungsform weist der Erdungsanker eine axiale Länge des Stabs auf, die im Bereich von 50 mm bis 200 mm liegt, wobei besonders bevorzugte Längen zwischen 60 mm und 150 mm, und noch bevorzugter zwischen 80 mm und 120 mm, gewählt werden können. Insbesondere kann die axiale Länge des Stabs 60 mm, 80 mm 100 mm oder 120 mm betragen. Eine kürzere Länge könnte für Anwendungen geeignet sein, bei denen der verfügbare Raum begrenzt ist oder wo eine flache Verankerung ausreicht, während längere Stäbe eine tiefere Verankerung und damit potenziell höhere Stabilität und Belastbarkeit bieten. Diese Anpassungsfähigkeit ist besonders vorteilhaft in der Sanierung bestehender Bauwerke, wo die Bedingungen variieren können. Darüber hinaus ermöglicht die Wahl der Stablänge eine bessere Integration in bestehende Armierungssysteme, indem sie die Kontaktierung sowohl von äußeren Anbauteilen als auch der inneren Armierungen ermöglicht.

Nach einer Ausführungsform weist der Erdungsanker einen Schlitz auf, der im unverformten Zustand (Vormontagezustand) eine konstante Weite im Bereich von 0,1 mm bis 4 mm, insbesondere im Bereich von 0,5 mm bis 3 mm, vorzugsweise im Bereich von 1 mm bis 2 mm, aufweist. Alternativ kann es bevorzugt sein, dass die in Umfangsrichtung gegenüberliegenden Seitenränder der Spannhülse im Vormontagezustand aneinander anliegen, wobei der Schlitz eine vorzugsweise konstante Weite von nicht mehr als 0,5 mm, insbesondere nicht mehr als 0,1 mm, bevorzugt nicht mehr als 0,01 mm, besonders bevorzugt von 0,0 aufweisen kann. Der Schlitz ist ein wesentlicher Bestandteil der Spannhülse und ermöglicht eine kontrollierte Aufweitung der Spannhülse in Radialrichtung, wenn der Spreizkörper in Axialrichtung gegen die Spannhülse gedrückt wird. Diese Aufweitung bewirkt, dass die Spannhülse fest gegen die Wandinnenseite der Bohrung im armierten Stahlbeton gepresst wird, wodurch eine stabile Verankerung des Erdungsankers gewährleistet ist. Die konstante Weite des Schlitzes im unverformten Zustand ist zweckmäßig für die gleichmäßige Verteilung der Spannkräfte und die Vermeidung von Materialermüdung oder ungleichmäßiger Belastung, die zu einer unsachgemäßen Verankerung führen könnten. Durch die Dimensionierung des Schlitzes wird sichergestellt, dass die Spannhülse sich gleichmäßig und vorhersehbar ausdehnt, was die Zuverlässigkeit und Sicherheit der Verankerung erhöht. Der Bereich der Schlitzweite von 0,1 mm bis 4 mm, insbesondere von 0,5 mm bis 3 mm, und vorzugsweise von 1 mm bis 2 mm, bietet eine optimale Balance zwischen Flexibilität und Festigkeit der Spannhülse. Ein schmaler aber dennoch eindeutig sichtbarer Schlitz kann dem Monteur helfen, die Spannhülse von der Glatthülse zu unterscheiden. Diese Dimensionierung ermöglicht es, dass der Erdungsanker in verschiedenen Bohrlochgrößen und -tiefen eingesetzt werden kann, was seine Vielseitigkeit und Anwendbarkeit in unterschiedlichen Bau- und Sanierungsszenarien erhöht.

Nach einer Ausführungsform ist der Erdungsanker mit einem zylinderhülsenförmigen Spreizkörper ausgestattet, der einen vollkreisförmigen Querschnitt aufweist. Insbesondere ist der Spreizkörper im Querschnitt als unterbrechungsfreier Kreisring geformt. Der vollkreisförmige Querschnitt des Spreizkörpers sorgt für eine gleichmäßige Verteilung der Kräfte, die auf die Wandinnenseite der Bohrung im Beton ausgeübt werden. Diese gleichmäßige Verteilung der Kräfte führt zu einer verbesserten Stabilität und Festigkeit der Verankerung, da die Spannhülse durch den Spreizkörper in Radialrichtung gegen die Wandinnenseite der Bohrung aufgespreizt wird. Der zylinderhülsenförmige Spreizkörper ermöglicht eine effiziente und zuverlässige Verankerung, indem er die Spannhülse gleichmäßig aufweitet und somit eine feste Verbindung zwischen dem Erdungsanker und dem umgebenden Betonmaterial herstellt.

Nach einer Ausführungsform der Erfindung weist der Erdungsanker einen geradlinigen Schlitz in der Spannhülse auf. Der geradlinige Schlitz trägt dazu bei, dass die Spannhülse sich gleichmäßig und vorhersehbar ausdehnt, was die Zuverlässigkeit und Sicherheit der Verankerung erhöht. Ein Vorteil des geradlinigen Schlitzes ist die Vereinfachung des Herstellungsprozesses der Spannhülse, da ein geradliniger Schnitt einfach und kostengünstig zu realisieren ist als komplexere Formen.

Nach einer Ausführungsform umfasst der Erdungsanker einen geradlinig in der Axialrichtung orientierten Schlitz. Der geradlinige Schlitz trägt dazu bei, dass die Spannhülse gleichmäßig und symmetrisch expandiert, was die Gefahr von ungleichmäßigen Spannungen und möglichen Beschädigungen der Spannhülse reduziert.

In einem Vormontagezustand ist die Spannhülse vorzugsweise locker an dem Stab mit dem Spreizkörper gehalten, insbesondere ist die Spannhülse im Vormontagezustand gleitend in axialer Richtung am rückseitigen Ende des Stabs entfernbar. Zum Montieren, d.h. zum Verbringen von einem Vormontagezustand in einen Montagezustand, kann ein Kit-of-Parts vorgesehen sein, der einerseits den Stab mit dem Spreizkörper und der Spannhülse umfasst, und der zusätzlich eine Glatthülse aufweist. Ein solches Kit-of-Parts kann ferner eine Mutter sowie gegebenenfalls eine Unterlegscheibe umfassen. Zur Montage armiertem Stahlbeton werden der Stab mit dem Spreizkörper und der Spannhülse in die Bohrung eingesetzt um dort zu verbleiben. Sodann kann eine Glatthülse von außen über den Stab gestülpt werden und von hinten gegen die Spannhülse gedrängt werden, um sie gegen den Spreizkörper zu verspannen. Infolge der auf die Spannhülse in der axialen Richtung wirkenden Spannung wird die Spannhülse durch den Spreizkörper vorzugsweise plastisch aufgeweitet, damit die radiale Außenumfangsfläche der Spannhülse gegen die innere Umfangswand der Bohrung drückt. Beim Aufweiten der Spannhülse vergrößert sich die Weite des wenigstens oder genau einen Schlitzes. In dem die teilringförmige Spannhülse durch den Schlitz durchbrochen ist, kann ist zum Aufweiten nur eine relativ geringe Kraft erforderlich. Bei einer Spannhülse mit wenigstens einem Radialvorsprung kann dieser bei der Aufweitung der Spannhülse in die innere Umfangswand der Bohrung hineingedrängt werden. Die Spannhülse sowie gegebenenfalls deren Radialvorsprung oder Radialvorsprünge sichern den Erdungsanker sodann gegen axiale Verschiebungen in dem Stahlbeton. In radialer Richtung ist die Spannhülse im Montagezustand durch den Spreizkörper aufgeweitet. Im Montagezustand sitzt die Spannhülse fest auf dem Spreizkörper. Bei einem in eine Bohrung eingesetzten Erdungsanker ist die Spannhülse im Montagezustand in der Radialrichtung zwischen der innere Umfangswand der Bohrung und der vorzugsweise konischen Außenumfangsfläche des Spreizkörpers eingespannt. Die Glatthülse und die Spannhülse sind vorzugsweise durch zwei strukturell voneinander getrennte oder separierbare Bauteile gebildet. Insbesondere kann die Gleithülse im Montagezustand gleitend in axialer Richtung am rückseitigen Ende des Stabs entfernbar. Sowohl im Vormontagezustand als auch im Montagezustand können Teile wie die Mutter oder eine Unterlegscheibe am hinteren Ende des Stabs können gelöst oder befestigt werden. Beispielsweise eine Mutter und eine Unterlegscheibe in Verbindung mit einer Ausgestaltung des Stabs als Gewindestab genutzt werden, um eine Montagekraft in der Axialrichtung auf die Glatthülse aufzubringen, um die Spannhülse gegen den Spreizkörper zu drängen. Im Montagezustand kann die Mutter und gegebenenfalls die Unterlegscheibe vom Stab entfernt werden, um die Gleithülse zu entfernen und/oder um eine elektrische Leitung beispielsweise mit einer Kontaktöse über das hintere Ende des Stabs zu stecken, wobei die Mutter und gegebenenfalls die Unterlegscheibe zum Fixieren der Leitung, insbesondere der Kontaktöse, eingesetzt werden kann.

Vorzugsweise umfasst der Erdungsanker ein elektrisch leitfähiges Material zum Leiten eines elektrischen Stroms in der Axialrichtung von einem ersten Ende zu einem zweiten Ende des Erdungsankers, insbesondere ein Metallmaterial, wie Edelstahl, oder besteht daraus. Vorzugsweise umfasst der Stab ein elektrisch leitfähiges Material, insbesondere ein Metallmaterial, wie Edelstahl, oder besteht daraus. Es kann bevorzugt sein, dass der Spreizkörper und/oder die Spannhülse ein elektrisch leitfähiges Material, insbesondere ein Metallmaterial, wie Edelstahl, umfassen oder daraus bestehen.

Die Erfindung betrifft auch ein Verfahren zum Montieren eines Erdungsankers in armierten Stahlbeton. Bei dem Verfahren wird ein Stab mit einer den Stab radial zur Axialrichtung umgebenden Spannhülse und einem Spreizkörper zum radialen Aufspreizen der Spannhülse bereitgestellt. Der Stab wird gemeinsam mit dem Spreizkörper und vorzugsweise der Spannhülse in ein Bohrloch eingesetzt. Das Montieren des Erdungsankers umfasst ferner, dass die Spannhülse, insbesondere mittels einer Mutter und einer Distanzhülse, derart in der Axialrichtung gegen den Spreizkörper verspannt wird ist, dass der Spreizkörper eine insbesondere plastische Aufweitung der Spannhülse in Radialrichtung gegen die Wandinnenseite der Bohrung veranlasst. Zum Verspannen kann ein Drehmoment im Bereich zwischen 10 Nm und 100 Nm aufgebracht werden, insbesondere zwischen 15 Nm und 50 Nm, vorzugsweise zwischen 20 Nm und 40 Nm, besonders bevorzugt zwischen 25 Nm und 35 Nm. Das Drehmoment zum Verspannen des Erdungsankers im Bohrloch kann insbesondere auf die Mutter aufgebracht werden. Dabei können ein Radialvorsprung oder mehrere Radialvorsprünge der Spannhülse, soweit vorhanden, in Radialrichtung in die Wandinnenseite der Bohrung hineingedrängt werden. Auf diese Weise kann eine in Axialrichtung feste Verankerung des Erdungsankers in dem Bohrloch bewirkt werden.

Optional kann das Montageverfahren das Durchführen einer oder mehrere die Montage vorbereitender Maßnahmen umfassen, welche vor dem Einsetzen des Stabs durchgeführt wird oder werden. Eine montagevorbereitende Maßnahme kann das Lokalisieren einer Metallarmierung in einem armierten Stahlbeton umfassen. Eine andere montagevorbereitende Maßnahme kann das Erzeugen eines Bohrlochs, vorzugsweise mit einem vorbestimmten Bohrlochdurchmesser von beispielsweise 16 mm, insbesondere mittels einer Bohrmaschine, umfassen. Das Bohrloch wird vorzugsweise so tief in den armierten Stahlbeton eingebracht, dass die Metallarmierung in dem Bohrloch elektrisch kontaktierbar ist. Das Bohrloch kann insbesondere mit einer Tiefe im Bereich von 2 cm bis 20 cm, vorzugsweise 3 cm bis 10 cm, besonders bevorzugt 4 cm bis 6 cm, beispielsweise etwa 5 cm, gebildet werden. Optional kann als eine montagevorbereitende Maßnahme eine Säuberung des erzeugten Bohrlochs, insbesondere mittels Druckluft, umfassen.

Der Stab kann mit weiteren Komponenten des Erdungsankers bereitgestellt werden, beispielsweise mit einer Distanzhülse, einer Unterlegscheibe und/oder einer Mutter. Die Unterlegscheibe und die Mutter können, einzeln oder gemeinsam, vor oder nach dem Einsetzen des Stabs mit dem Spreizkörper und der Spannhülse in das Bohrloch bereitgestellt werden. Das Bereitstellen kann umfassen, dass der Stab als Gewindestab bereitgestellt wird, wobei optional ein Spreizkörper mit Innengewinde und/oder eine Mutter aufgeschraubt werden kann bzw. können. Zusätzlich oder alternativ kann das Bereitstellen umfassen, dass eine Spannhülse und/oder eine Distanzhülse auf den Stab aufgesteckt werden. Die Spannhülse und/oder die Distanzhülse kann bzw. können vor oder nach dem Einsetzen des Stabs mit dem Spreizkörper und der Spannhülse in das Bohrloch bereitgestellt werden. Insbesondere kann eine Gleithülse wahlweise vor oder nach dem Einsetzen des Stabs bereitgestellt werden. Es kann bevorzugt sein, dass eine Keilhülse, insbesondere gemeinsam mit der Spannhülse, vor dem Einsetzen des Stabs in das Bohrloch bereitgestellt wird.

Gemäß einer bevorzugten Ausführungsform des Montageverfahrens wird der Stab mit einer Distanzhülse, insbesondere einer Keilhülse. bereitgestellt, die den Stab umgreift, und der Stab wird derart das Bohrloch eingesetzt wird, dass die Distanzhülse, insbesondere deren außenseitige Fußfläche, im Wesentlichen mit einer Wandfläche des armierten Stahlbetons fluchtet. Vorzugsweise wird der Erdungsanker mit der Distanzhülse in das Bohrloch, insbesondere mithilfe eines Gummihammers, eingeschlagen. Die Stirnfläche der Distanzhülse ist dabei vorzugsweise der Spannhülse und/oder dem Spreizkörper zugewandt. Die Stirnfläche und die Fußfläche der Distanzhülse sind einander in der Axialrichtung gegenüberliegend vorgesehen. Eine als Distanzhülse gebildete Distanzhülse kann so in das Bohrloch eingebracht werden, dass sie den Erdungsanker in dem Bohrloch, insbesondere gegen Radialbewegung, an der Wandinnenseite der Bohrung fixiert. Insbesondere kann die Distanzhülse als eine Keilhülse mit einem Halteabschnitt bereitgestellt werden, der nach dem Einbringen der die Distanzhülse nach dem Einbringen an der Wandinnenseite der Bohrung fixiert.

Bei einer bevorzugten Ausführungsform des Montageverfahrens wird der Stab eingesetzt, bis der Stab die Metallarmierung kontaktiert, wobei ein insbesondere axialer Abstand von wenigstens 10 mm zwischen der Metallarmierung und dem Spreizkörper und/oder der Spannhülse gewahrt bleibt. Das Drehmoment zum Kontaktieren der Armierung durch den Stab kann insbesondere durch eines Schraubenmitnahmeprofil, insbesondere ein mehrkantiges oder sternförmiges Schraubenmitnahmeprofil, in den Stab eingeleitet werden. Zum Kontaktieren kann ein Drehmoment im Bereich zwischen 5 Nm und 75 Nm aufgebracht werden, insbesondere zwischen 10 Nm und 50 Nm, vorzugsweise zwischen 15 Nm und 30 Nm, besonders bevorzugt zwischen 20 Nm und 25 Nm. Zwischen dem Kontaktieren der Metallarmierung durch den Stab und dem Verspannen von Spannhülse und Spreizkörper kann die Mutter wieder gelöst werden. Insbesondere bleiben in dem fertig Montierten Zustand des Erdungsankers wenigstens 15 mm Abstand, vorzugsweise wenigstens 20 mm Abstand, besonders bevorzugt wenigstens 20 mm Abstand zwischen dem Spreizkörper und/oder der Spannhülse, vorzugsweise sowohl dem Spreizkörper als auch der Spannhülse, und der Metallarmierung gewahrt. Überaschenderweise hat sich gezeigt, dass ein zu geringerer Abstand zwischen dem Spreizkörper und/oder der Spannhülse oder anderen dübelartigen Bauteil und der Metallarmierung zu einem katastrophalen Versagen des Erdungsankers infolge eines Blitzstroms führen kann. Versuche haben gezeigt, dass bei einem zu geringen Abstand infolge des sogenannten "Skin-Effects" ein Lichtbogen der mit Temperaturen weit oberhalb der Schmelztemperatur des Stabs zwischen der Armierung und dem dübelartigen Bauteil auftreten kann, durch die der Stab verbrennt.

Das Montageverfahren kann ferner das Einbringen eines Dichtmittels in die mit dem Erdungsanker belegten oder zu belegenden Bohrlochs umfassen. Alternativ oder zusätzlich kann das Montageverfahren das Aufbringen eines Dichtmittels den das Bohrloch belegenden Erdungsanker, insbesondere die Distanzhülse, beispielsweise deren Fußfläche, umfassen. Durch das Dichtmittel kann der Erdungsanker vor korrodierender Feuchtigkeit geschützt werden. Das Ein- und/oder Aufbringend es Dichtmittels kann beispielsweise umfassen, dass eine Silikonmasse appliziert wird.

Ferner kann das Montagefahren das Anbringen einer Erdungsschreibe mit einem Durchmesser aufweisen, der wenigstens 2-mal, insbesondere wenigstens 3-mal, vorzugsweise wenigstens 5-mal so groß ist wie der Außendurchmesser des Stabs umfassen. Alternativ oder Zusätzlich kann das Montageverfahren umfassen, dass wenigstens ein elektrisches Bauteil mit dem im Bohrloch eingesetzten Erdungsanker verbunden wird. Das elektrische Bauteil wird mit dem Erdungsanker vorzugsweise nach dem Kontaktieren der Armierung sowie gegebenenfalls nach dem Ein- und/oder Aufbringen des Dichtmittels verbunden.

Die Durchführung des Montageverfahrens kann insbesondere die Verwendung eines Erdungsankers wie hierin beschrieben umfassen. Der hier Erdungsanker kann insbesondere gemäß des hierin beschriebenen Montageverfahrens eingesetzt werden.

Vorzugsweise können mehrere oder alle Aspekte der Erfindung, wie auch der Weiterbildungen und Ausführungsformen, miteinander kombiniert sein, sofern hierbei kein ausdrücklicher Widerspruch besteht. Der erste Aspekt der Erfindung, der zweite Aspekt der Erfindung, der dritte Aspekt der Erfindung, der vierte Aspekt der Erfindung, der fünfte Aspekt der Erfindung, und/oder der sechste Aspekt der Erfindung, sind beliebig miteinander kombinierbar.
- Figur 1: zeigt eine Ausführungsform eines Erdungsankers zum Einsetzen in armierten Stahlbeton mit einem Stab, auf den einerseits ein Spreizkörper und andererseits eine Mutter aufgeschraubt sind, wobei zwischen dem Spreizkörper und der Mutter eine Spannhülse, eine Distanzhülse und eine Unterlegscheibe angeordnet sind, die den Stab vollumfänglich umgeben und wobei der Spreizkörper sich in unverformtem Zustand befindet.
- Figur 2: zeigt eine Ausführungsform eines in eine Bohrung in armiertem Stahlbeton eingesetzten Erdungsankers, dessen erstes Ende die Stahlbewehrung des Stahlbetons kontaktiert und dessen zweites Ende aus der Bohrung herausragt.
- Figur 3: zeigt eine schematische Darstellung des Stabs, des Spreizkörpers und der Spannhülse.
- Figur 4: zeigt eine Schnittansicht des Stabs, des Spreizkörpers und der Spannhülse.
- Figur 5: zeigt eine Schnittansicht des Spreizkörpers.
- Figur 6: zeigt eine Draufsicht auf den Spreizkörper.
- Figur 7: zeigt eine schematische Darstellung einer alternativen Ausführungsform eines erfindungsgemäßen Erdungsankers.
- Figur 8: zeigt eine Ausführungsform eines in eine Bohrung in armiertem Stahlbeton eingesetzten Erdungsankers gemäß der zweiten Ausführungsform.
- Figur 9: zeigt eine Schnittansicht der Distanzhülse, des Spreizkörpers und der Spannhülse gemäß der zweiten Ausführungsform.
- Figur 10: zeigt eine schematische Darstellung der Spannhülse, des Spreizkörpers und der Spannhülse gemäß Figur 9.

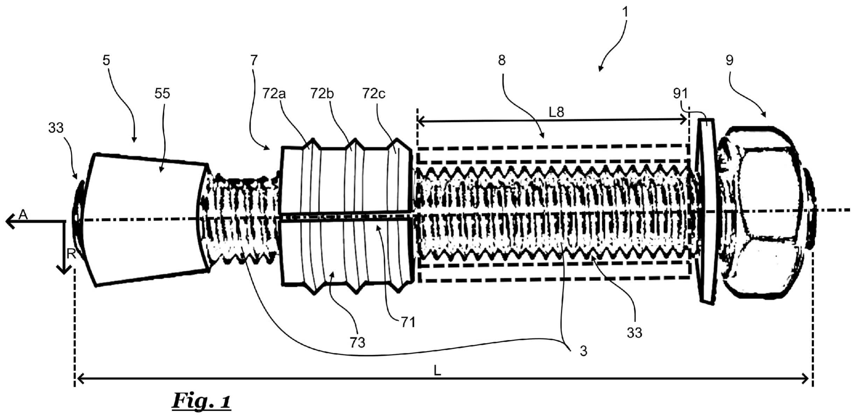

Fig. 1 zeigt eine detaillierte schematische Ansicht eines Erdungsankers 1, der zum Einsetzen in armierten Stahlbeton vorgesehen ist in einem Vormontagezustand. Der Erdungsanker 1 besteht aus mehreren Komponenten, die im Folgenden ausführlich beschrieben werden.

Der zentrale Bestandteil des Erdungsankers 1 ist der Stab 3, der eine Axialrichtung A definiert. Der Stab 3 ist mit einem Außengewinde 33 versehen, das sich entlang seiner axialen Länge L erstreckt.

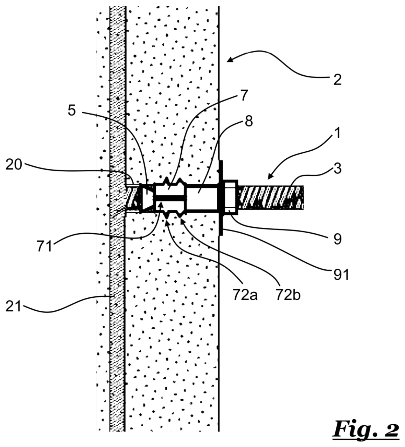

Am vorderen Ende des Stabs 3 ist ein Spreizkörper 5 aufgeschraubt. Das vordere Ende des Stabs 1 dient dazu, die Stahlbewehrung 21 zu kontaktieren, wie in Fig. 2 dargestellt. Der Spreizkörper 5 weist einen Außenkonus 55 auf, der in der Axialrichtung A ausgelegt und eingerichtet ist, um in die Spannhülse 7 einzufahren. Der Spreizkörper 5 hat in der Axialrichtung A eine erste Länge L5 und die Spannhülse 7 hat eine zweite Länge L7, wobei die zweite Länge L7 größer ist als die erste Länge L5. Der Außenkonus 55 hat einen n Außenkonuswinkel α, der in einem Bereich von 5° bis 15° liegt, vorzugsweise 12°.

Die Spannhülse 7 umgibt den Stab 3 radial zur Axialrichtung A und ist mit einem Schlitz 71 versehen, der sich in der Axialrichtung A durch die Spannhülse 7 erstreckt. Bei der abgebildeten Ausführungsform ist der Schlitz 71 geradlinig, parallel zur Symmetrieachse des Erdungsankers 1. Der Schlitz 71 ermöglicht das radiale Aufspreizen der Spannhülse 7, wenn der Spreizkörper 5 in die Spannhülse 7 eingefahren wird. Die Spannhülse 7 weist mehrere Radialvorsprünge 72a, 72b und 72c auf, die entlang des Außenumfangs 73 der Spannhülse 7 angeordnet sind. Diese Radialvorsprünge 72a, 72b und 72c sind dazu ausgelegt, in den Stahlbeton einzudringen und eine feste Verankerung zu gewährleisten.

Zwischen der Spannhülse 7 und der Mutter 9 ist eine Distanzhülse 8 angeordnet, die ebenfalls den Stab 3 vollumfänglich umgibt. Die Distanzhülse 8 hat bei der abgebildeten Ausführungsform eine dritte Länge L8, die etwa doppelt so groß ist wie die zweite Länge L7.

Der Stab 3 kann an seinem ersten Ende ein mehrkantiges oder sternförmiges Schraubenmitnahmeprofil aufweisen, das als Innensechskantprofil 31 ausgebildet ist.

Dies ermöglicht die Verwendung eines passenden Schlüssels zum Halten und Drehen des Stabs 3 während der Installation.

Am hinteren Ende des Stabs 3 befindet sich eine Mutter 9, die auf das Außengewinde 33 des Stabs 3 aufgeschraubt ist. Eine Unterlegscheibe 91 ist zwischen der Mutter 9 und der Distanzhülse 8 angeordnet, um die Last gleichmäßig in die Spannhülse 7 einzuleiten. Am hinteren Ende des Stabs 8 können Anbauteile, wie eine Kontaktierungsöse einer elektrischen Erdungsleitung, angebracht werden.

Der Erdungsanker 1 wird in ein zuvor gebohrtes Loch im armierten Stahlbeton eingesetzt. Durch das Anziehen der Mutter 9 wird der Spreizkörper 5 in die Spannhülse 7 gezogen, wodurch die Spannhülse 7 radial aufgespreizt wird. Die Radialvorsprünge 72a, 72b und 72c graben sich dabei in den umgebenden Stahlbeton ein und sorgen für eine feste Verankerung des Erdungsankers 1.

Der Erdungsanker 1 ist so ausgelegt, dass er nach der Installation eine zuverlässige elektrische Verbindung zum Stahlbeton herstellt und somit als Erdungspunkt dient. Die Konstruktion mit dem Spreizkörper 5 und der Spannhülse 7 gewährleistet eine sichere und dauerhafte Verankerung im Stahlbeton.

Fig. 2 zeigt eine schematische Darstellung eines Erdungsankers 1, der in eine Bohrung 20 im armierten Stahlbeton 2 eingesetzt ist. Der abgebildete Erdungsanker 1 besteht aus mehreren Komponenten, die in der Abbildung detailliert dargestellt sind. Der Stab 3 erstreckt sich in Axialrichtung und ist ein zentrales Element des Erdungsankers 1. Am vorderen Ende des Stabs 3 ist ein Spreizkörper 5 befestigt, der dazu dient, die Spannhülse 7 radial aufzuspreizen.

Die Spannhülse 7 umgibt den Stab 3 radial und ist mit einem Schlitz 71 versehen, der sich in Axialrichtung erstreckt. Dieser Schlitz 71 ermöglicht das radiale Aufspreizen der Spannhülse 7, wenn der Spreizkörper 5 in Axialrichtung bewegt wird. Die Spannhülse 7 ist mit Radialvorsprüngen 72a und 72b ausgestattet, die in den Stahlbeton 2 eingreifen, um eine feste Verankerung zu gewährleisten. Diese Radialvorsprünge erstrecken sich entlang des Außenumfangs der Spannhülse 7 und sind so konzipiert, dass sie bei der radialen Aufweitung der Spannhülse 7 in die Wandinnenseite der Bohrung 20 eindringen.

Zwischen der Spannhülse 7 und der Mutter 9 ist eine Distanzhülse 8 angeordnet, die in Axialrichtung wirkt. Die Mutter 9 kann auf den Stab 3 aufgeschraubt werden und dazu dienen, die Spannhülse 7 mittels der Distanzhülse oder Glatthülse 8 gegen den Spreizkörper 5 zu verspannen. Eine Unterlegscheibe 91 ist ebenfalls zwischen der Mutter 9 und der Distanzhülse 8 platziert, um eine gleichmäßige Druckverteilung zu gewährleisten.

Der Stab 3 ist so konfiguriert, dass sein zweites Ende die Stahlbewehrung 21 des Stahlbetons 2 kontaktiert, während das erste Ende aus der Bohrung 20 herausragt. Der Spreizkörper 5 ist so gestaltet, dass er in die Spannhülse 7 radial Aufweiten kann, damit die Spannhülse 7 in Radialrichtung R gegen die Wandinnenseite der Bohrung 20 gedrängt wird. Bei der abgebildeten Ausführungsform sind am Zylinderaußenmantel der Spannhülse drei voll umlaufende, ringförmige Radialvorsprünge 72a, 72b, 72c vorgesehen, die in den armierten Stahlbeton hineingetrieben werden können.

Die Spannhülse 7 ist mit einem Innenkonus ausgestattet, der zum Überfahren des Spreizkörpers 5 in Axialrichtung ausgelegt ist. Diese Konfiguration ermöglicht eine einfache Kraftübertragung und Verankerung im Beton. Der Erdungsanker 1 ist so konzipiert, dass er nach dem Einsetzen in die Bohrung 20 und der Verspannung der Spannhülse 7 eine dauerhafte und zuverlässige Verbindung mit der Stahlbewehrung 21 und dem umgebenden Beton 2 gewährleistet.

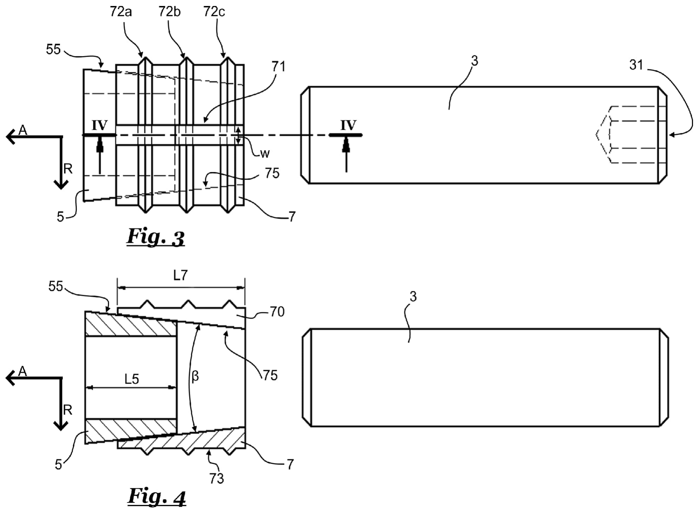

Fig. 3 zeigt eine schematische Explosionsansicht eines Erdungsankers 1, der für den Einsatz in armiertem Stahlbeton konzipiert ist. Der Erdungsanker umfasst einen Stab 3, der eine Axialrichtung A definiert. Bei der abgebildeten Ausführung ist der Stab 3 als Gewindestab realisiert, dessen Gewinde sich über die gesamte axiale Länge L des Stabs 3 erstreckt. Es kann besonders bevorzugt sein, dass der Stab 3 als Gewindestab realisiert ist, wobei eine axiale Länge des Stabs 60 mm, 80 mm 100 mm oder 120 mm beträgt und wobei der Gewindestab ein M6-Außengewinde oder ein M10-Außengewinde aufweist. Der Stab 3 ist mit einem Innensechskant 31 ausgestattet, der eine einfache Verschraubung ermöglicht. Um den Stab 3 ringsherum ist eine Spannhülse 7 angeordnet, die zylinderhülsenförmig um die Axialrichtung A verläuft. Die Spannhülse 7 weist einen Schlitz 71 auf, der sich in der Axialrichtung A erstreckt und die Spannhülse vollständig durchdringt. Der Schlitz 71 hat im eine konstante Weite w, die im Vormontagezustand beispielsweise etwa 2 mm betragen kann. Die Spannhülse 5 umgibt die den Stab 3 mit einem Umfangswinkel von nahezu 360 °.

Die Spannhülse 7 ist mit mehreren Radialvorsprüngen 72a, 72b, 72c versehen, die vollumfänglich am vom Schlitz 71 durchbrochenen Außenumfang 73 der Spannhülse verlaufen. Diese Radialvorsprünge 72a, 72b, 72c sind so gestaltet, dass sie beim Einsetzen in den Stahlbeton in diesen eingreifen und eine sichere Verankerung gewährleisten. Alternativ sind kürzere Radialvorsprünge denkbar, die sich über einen Bogenwinkel von mindestens 90° um die Axialrichtung A erstrecken, wobei zwei oder mehr in Umfangsrichtung benachbarte Radialvorsprünge vorgesehen sein können (nicht dargestellt).

Der Spreizkörper 5 ist an dem Stab 3 befestigt oder befestigbar und dient dazu, die Spannhülse 7 radial aufzuspannen. Der Spreizkörper 5 ist mit einem Außenkonus 55 ausgestattet, der zum Einfahren in die Spannhülse 7 in der Axialrichtung A ausgelegt ist. Der Außenkonus 55 weist einen Außenkonuswinkel α auf, der im Bereich von 5° bis 15° liegt. Die Spannhülse 7 ist mit einem Innenkonus 75 versehen, der einen Innenkonuswinkel β aufweist, der ebenfalls im Bereich von 5° bis 15° liegt. Bei der abgebildeten Ausführungsform sind der Außenkonuswinkel α und Innenkonuswinkel β gleich groß. Der Innenkonus 75 liegt dann flächig an dem Außenkonus 55 an, sodass eine große axiale und radiale Kraft mit minimaler Druckspannung zwischen dem Spreizkörper 5 und der Spannhülse 7 wirken kann. Alternativ kann es, beispielsweise zur Vereinfachung der Herstellung, vorgesehen sein, dass nur der Spreizkörper 5 oder nur die Spannhülse 7 mit einer konischen Kontaktfläche gebildet ist. Der Innenkonus 75 ist so gestaltet, dass er den Spreizkörper 5 in der Axialrichtung A überfahren kann, um eine plastische Verformung der Spannhülse in der Radialrichtung R zu vereinfachen.

Fig. 4 zeigt eine Schnittansicht entlang der Schnittlinie IV-IV aus Fig. 3. Hier wird die Beziehung zwischen dem Spreizkörper 5 und der Spannhülse 7 deutlicher. Der Ringkörper 70 der Spannhülse 7 umgibt den Spreizkörper 5, wobei der Innenkonus 75 der Spannhülse 7 mit dem Außenkonus 55 des Spreizkörpers 5 interagiert. Die zweite Länge L7 der Spannhülse 7 ist größer oder gleich der ersten Länge L5 des Spreizkörpers 5, was eine vollständige Aufweitung der Spannhülse beim Einfahren des Spreizkörpers vereinfacht.

Die Konstruktion des Erdungsankers ermöglicht eine einfache und sichere Verankerung im armierten Stahlbeton, indem die Spannhülse 7 durch den Spreizkörper 5 in der Radialrichtung R gegen die Wandinnenseite einer Bohrung gedrückt wird. Dies wird durch das Zusammenspiel der konischen Geometrien von Innenkonus 75 und Außenkonus 55 erreicht, die eine kontrollierte und gleichmäßige Verformung der Spannhülse 7 sicherstellen.

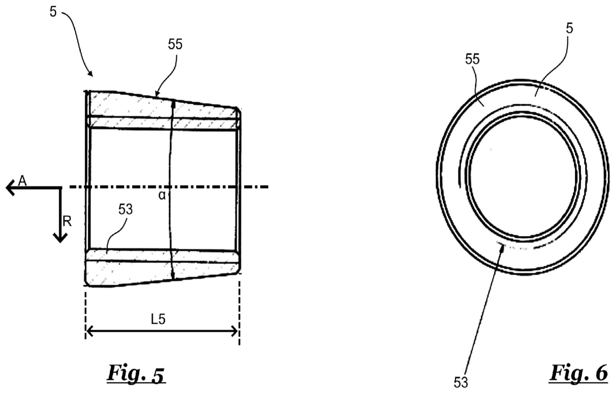

Fig. 5 zeigt eine Schnittansicht des Spreizkörpers 5. Der Spreizkörper ist zylinderhülsenförmig gestaltet und weist einen vollkreisförmigen Querschnitt auf. Der Spreizkörper 5 ist mit einem Außenkonus 55 versehen, der in der Radialrichtung R von der axialen Mitte des Spreizkörpers nach außen verläuft. Der Außenkonus 55 ist so gestaltet, dass er einen Außenkonuswinkel α aufweist, der im Bereich von 5° bis 15° liegt, insbesondere im Bereich von 10° bis 13°, vorzugsweise von 12°. Dieser Außenkonus ist zweckmäßig für die Funktion des Spreizkörpers, da er das Aufweiten der Spannhülse in der Radialrichtung ermöglicht, wenn der Spreizkörper in die Spannhülse eingeführt wird.

Der Spreizkörpers 5 weist ein Innengewinde 53 auf, das komplementär zu einem Außengewinde 33 des Stabs 3 des Erdungsankers 1 ist. Dieses Innengewinde ermöglicht es, den Spreizkörper auf den Stab aufzuschrauben, wodurch eine feste Verbindung zwischen diesen beiden Komponenten hergestellt wird. Die axiale Richtung A ist in der Abbildung durch eine gestrichelte Linie dargestellt, die die Symmetrieachse des Erdungsankers 1 kennzeichnet.

Fig. 6 bietet eine Draufsicht auf den Spreizkörper 5, die den vollkreisförmigen Querschnitt des Spreizkörpers verdeutlicht. Der Außenkonus 55 ist in dieser Ansicht als der äußere Ring sichtbar, der den Innenkonus des Spreizkörpers umgibt. Das Innengewinde 53 ist als innerer Kreis dargestellt, der den zentralen Bereich des Spreizkörpers einnimmt.

Der Spreizkörper 5 ist darauf ausgelegt, in der Axialrichtung A in die Spannhülse 7 eingeführt zu werden, um eine plastische Verformung der Spannhülse 7 in der Radialrichtung R zu bewirken. Diese Verformung sorgt dafür, dass die Spannhülse 7 und somit der Erdungsanker 1 fest gegen die Wandinnenseite einer Bohrung 20 im armierten Stahlbeton 2 gepresst wird, wodurch eine stabile Verankerung des Erdungsankers 1 erreicht wird.

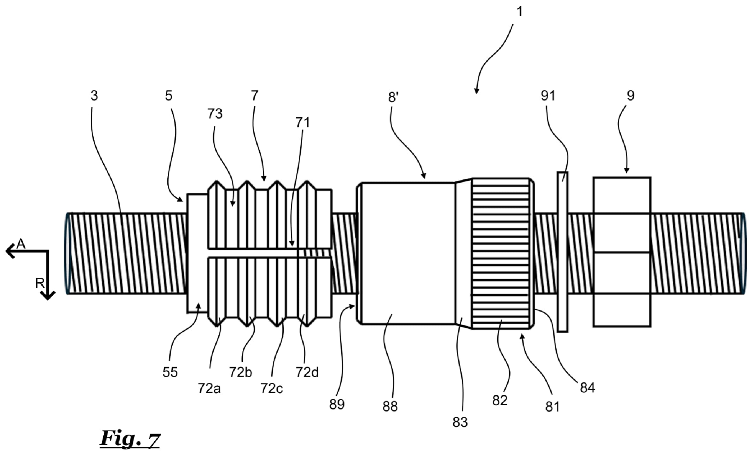

Figur 7 zeigt eine schematische Darstellung einer alternativen Ausführungsform eines erfindungsgemäßen Erdungsankers 1. Von der oben beschriebenen Ausführungsform unterscheidet sich der in der Figur 7 dargestellte Erdungsanker 1 im Wesentlichen nur durch die Form der Distanzhülse 8' und die Anzahl der Radialvorsprünge 72a, 72b, 72c, und 72d. Die Spannhülse 7 hat vier Radialvorsprünge 72 a, 72b, 72c, 72d. Zur Vermeidung von Wiederholungen wird auf die obigen Ausführungen verwiesen.

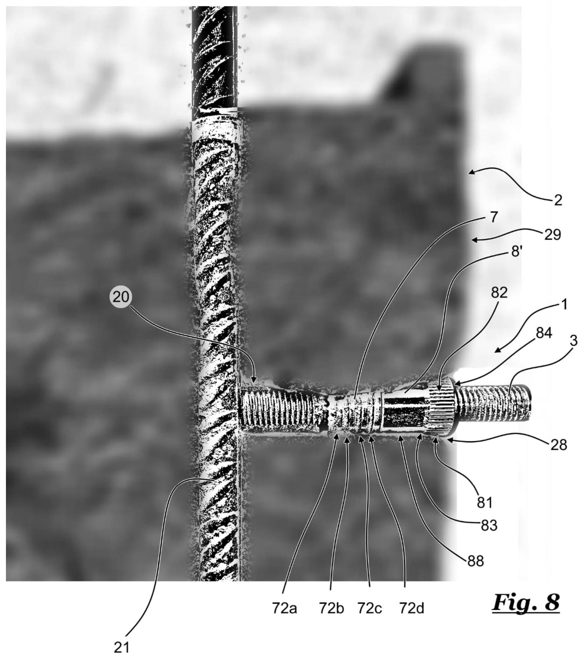

Die Distanzhülse 8, die im Folgenden anhand der Figuren 8-10 näher beschrieben wird, weist einen Halteabschnitt 81, einen Keilabschnitt 83 und einen Zylinderabschnitt 88 auf.

Der Halteabschnitt 81 ist mit einer geradlinigen Rändelung 82 gebildet. Die Rändelung 82 erstreckt sich koaxial und achsensparallel in der Axialrichtung A. Die Rändelung 82 setzt sich aus in Radialrichtung R hervorstehenden Vorsprüngen zusammen.

Figur 8 zeigt eine vereinfachte Darstellung eines in armierten Stahlbeton 2 eingesetzten Erdungsankers 1 mit einer Distanzhülse 8' gemäß der zweiten Ausführungsform. Der Schlitz der Spannhülse 7 ist in der abgebildeten Darstellung verdeckt und dadurch nicht sichtbar.

Die Spannhülse 7 kann genau einen Schlitz 71 aufweisen. Alternativ kann die Spannhülse zwei in der Zeichnungsebene liegende Schlitze aufweisen, welche die Spannhülse 7 im unmontierten Zustand in der Axialrichtung A nicht vollständig durchdringen (nicht dargestellt).

Die Schnittdarstellung Figur 8 zeigt, dass der als Gewindestange ausgeführte Stab 3 die Stahlbewehrung 21 des armierten Stahlbetons 2 in ca. 5 cm Tiefe kontaktiert. Der Abstand von der Stahlbewehrung 21 zur Spannhülse 7 und dem in diese hineingezogenen Spreizkörper (nicht sichtbar) beträgt etwa 20 mm oder mehr. In diesem Bereich sitzt der Stab 3 ohne umfänglich Einhausung in dem Bohrloch 20.

Die vier Radialvorsprünge 72a, 72b, 72c, und 72d der Spannhülse 7 wurden in der Radialrichtung R in die Innenwand der Bohrung 20 hineingedrängt und halten die Spannhülse 7 fest im armierten Stahlbeton 2. Dank der Verspannung des Spreizkörpers 5 gegen die Spannhülse 7 ist der Erdungsanker 1 durch die Spannhülse 7 fest in der Bohrung 20 gehalten.

Die Distanzhülse 8' wurde in die Bohrung 20 in der Axialrichtung A hineingetrieben. Dazu kann der Erdungsanker 1 beispielsweise in einem Vormontagezustand, in dem der Erdungsanker 1 bereits mit dem Spreizkörper 5, der Spannhülse 7 und der Distanzhülse 8' sowie gegebenenfalls einer Mutter und einer Unterlegscheibe belegt sein und mit einem Gummihammer in die Bohrung 20 hineingetrieben werden.

Vor dem Einsetzen des Erdungsankers 1 in die Bohrung 20 muss diese zunächst in den Stahlbeton 2 eingebracht werden, beispielsweise durch einen Bohrer, insbesondere mit einer Nennweite von 16 mm oder ähnlichem, zum Erzeugen der Bohrung 20 mit vorbestimmten Bohrlochdurchmesser. Damit die Bohrung 20 an der richtigen Stelle platziert wird, kann zuvor, beispielsweise mittels einer Metallsuchvorrichtung, die Armierung 21 in dem Stahlbeton 2 lokalisiert werden. Vor dem Einsetzen des Erdungsankers 1 kann es zweckmäßig sein, die Bohrung 20 beispielsweise mittels Druckluft zu reinigen.

Der Erdungsanker kann mit der Distanzhülse 9' derart in den Stahlbeton 2 eingesetzt werden, dass die außenseitige Fußfläche 84 etwa fluchtend an der flachen Außenseite 29 der Wand aus armiertem Stahlbeton 2 anliegt. In einen Mündungsbereich 28 des Bohrlochs kann eine (nicht näher dargestellt) Dichtmasse eingebracht werden, um die Stahlbewehrung 21 und den Erdungsanker 1 vor Korrosion durch Feuchtigkeit zu schützen. Der Halteabschnitt 81 der eingesetzten Distanzhülse 8' steht in einem Kontakteingriff mit der in den Wandung der Bohrung 20, um die Distanzhülse 8' drehfest im armierten Stahlbeton 2 zu halten.

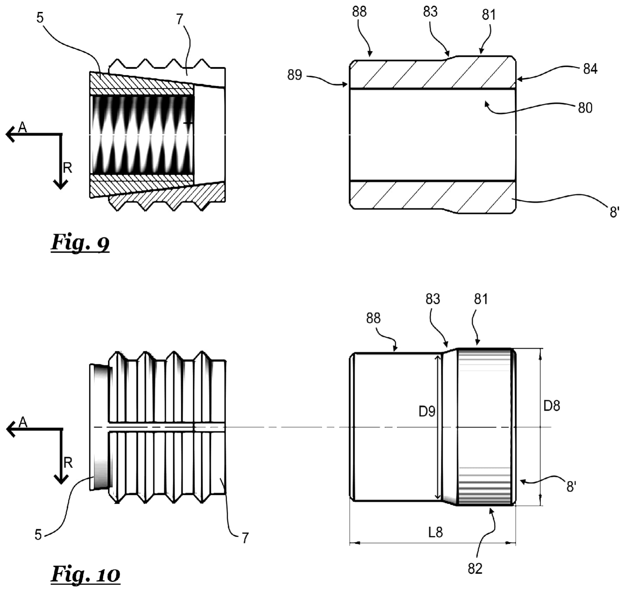

Figur 9 zeigt eine Schnittansicht des Spreizkörpers 5, der Spannhülse 7und der Distanzhülse 8gemäß der zweiten Ausführungsform des Erdungsankers 1. Figur 10 zeigt eine Seitenansicht des Spreizkörpers 5, der Spannhülse 7 und der Distanzhülse 8gemäß Figur 9. Der in den Figuren 9 und 10 dargestellte Spreizkörper 5 und die abgebildete Spannhülse 7 entsprechen im Wesentlichen denen oben in Bezug auf die Figuren 3 und 4 beschriebenen.

Der Spreizkörper 5 ist in die Spannhülse 7 eingesetzt. In der Axialrichtung A umgreift, die Spannhülse 7 den Spreizkörper 5 zu mehr als der Hälfte. An der Außenseite des Ringkörper 70 der Spannhülse 7 sind vier Radialvorsprünge 72a, 72b, 72c, und 72d angeordnet. Die Radialvorsprünge 72a, 72b, 72c, und 72d haben die gleiche Form und Größe.

Ein erster Radialvorsprung 72a kann unmittelbar am vorderen Ende [unmittelbar] des der Spannhülse 7 angeordnet sein. Die mehreren Radialvorsprünge 72a, 72b, 72c, und 72d der Spannhülse können äquidistant über die axiale Länge (zweite Länge L7) der Spannhülse 7 verteilt angeordnet sein.

Am hinteren Ende der Spannhülse 7 und dem hintersten Radialvorsprung 72d ist ein axialer Abstand vorgesehen. Das hintere Ende der Spannhülse 7 kann, wie in Figur 8 dargestellt, bei der Montage des Erdungsankers 1 in einen axialen Berührkontakt mit der Distanzhülse gebracht werden.

Bei der in den Figuren 9 und 10 dargestellten Ausführungsform ist die erste Länge L5 kürzer als die zweite Länge 7. Die zweite Länge L7 ist etwa 1,5 mm größer als die erste Länge L5. Die dritte Länge L8 der Distanzhülse 8' ist größer als die erste Länge L5 und größer als die zweite Länge L7. Die zweite Länge L7 kann beispielsweise 14 mm betragen, die erste Länge L5 kann 12,5 mm betragen und die dritte Länge L7 kann 20 mm betragen.

Die Distanzhülse 8 weist in der hier abgebildeten Ausführungsform einen Zylinderabschnitt 88, einen Keilabschnitt 83 und einen Halteabschnitt 81 auf. Ferner weist die Distanzhülse 8' am Übergang zwischen der Stirnseite 89 und dem Außenumfang der Distanzhülse 8' eine Fase auf. Die Distanzhülse 8' hat eine Fase am Übergang zwischen dem Außenumfang und der Fußfläche 84. Die der Keilabschnitt 83 kann zusätzlich zu der stirnseitigen Phase ausgebildet sein. Vorzugsweise hat der Keilabschnitt 83 eine längere Axialerstreckung als die Fase oder Fasen.

Der optionale Zylinderabschnitt 88 der Distanzhülse 8' ist kleiner als der vorbestimmte Bohrlochdurchmesser und kann zum Einfädeln der Distanzhülse 8' in das Bohrloch 20 vorgesehen sein.

Im Bereich des Halteabschnitts 81 weist die Distanzhülse 8' einen Halteabschnitts-Durchmesser D8 auf. Der Halteabschnitt-Durchmesser D8 kann größer sein als der vorbestimmte Bohrlochdurchmesser, um eine Presspassung zwischen der Distanzhülse und der Bohrung zu realisieren.

Außenseitig können in dem Halteabschnitt 81 radiale Vorsprünge, beispielsweise in Form einer Profilierung 82, vorgesehen sein. Die Vorsprünge können sich über die Axiallänge des Halteabschnitts geradlinig in der Axialrichtung A erstrecken, um eine axiale Einfügebewegung der Distanzhülse 8' in die Bohrung 20 zu unterstützen. Die Profilierung 82 oder anders geformte Vorsprünge im Bereich des Halteabschnitts 81 können als rotationshemmende Elemente bereitgestellt sein. Alternativ kann der Halteabschnitt kann frei von einer Profilierung oder anderen radialen Vorsprüngen gebildet sein (nicht dargestellt), um die Herstellung zu vereinfachen.

Am vorderen Ende des Halteabschnitts 81 kann ein Keilabschnitt 83 vorgesehen sein. Der Keilabschnitt 83 kann als Montagehilfe zum formschlüssigen und/oder verpressten Einführen des Halteabschnitts 81 in die Bohrung 20 dienen. Der Keilabschnitt 83 kann, wie abgebildet, in der Axialrichtung A vorderseitig unmittelbar an den Halteabschnitt 81 anschließen. Der Keilabschnitt 83 kann frei von einer Profilierung oder anderen Radialvorsprüngen gebildet sein. Alternativ ist es denkbar (nicht dargestellt), dass der Halteabschnitt 81 den Keilabschnitt 83 in Bezug auf die Axiallänge des Keilabschnitts teilweise oder vollständig überlappt.

Der maximale Keilabschnitt-Durchmesser kann dem Halteabschnitt-Durchmesser D8 entsprechen. Der minimale Keilabschnitt-Durchmesser D9 ist kleiner als der maximale Keilabschnitt-Durchmesser D8. Der minimale Keilabschnitt-Durchmesser D9 ist vorzugsweise kleiner als die vorbestimmte Bohrlochgröße. Bei der abgebildeten Ausführung der Distanzhülse 8' mit dem optionalen Zylinderabschnitt 88 ist Letzterer mit demselben Durchmesser D9 ausgeführt wie der minimale Keilabschnitt-Durchmesser D9. Der Halteabschnitt 81 erstreckt sich über etwa ein Drittel der Gesamtlänge L8 der Distanzhülse 8'. Der Zylinderabschnitt 88 erstreckt sich über etwa die Hälfte der dritten Länge L8.

Im Bereich des Zylinderabschnitts 88 weist die Distanzhülse 8' einen konstanten Durchmesser (hier: den minimalen Keilabschnitt-Durchmesser D9) auf. Im Bereich des Halteabschnitts 81 weist die Distanzhülse eine konstanten Außendurchmesser D8 auf.

Die Distanzhülse 8' ist in der Axialrichtung A vollständig von einer Durchgangsöffnung 80 durchdrungen. Im montierten Zustand sitzt der Stab 3 in der Durchgangsöffnung 80. Die Durchgangsöffnung 80 weist einen konstanten Innendurchmesser auf. Innenseitig kann die Durchgangsöffnung 80 glatt sein. Der Innendurchmesser der Durchgangsöffnung 80 ist größer als oder gleich groß wie der Außendurchmesser des Stabs 3.

### BEZUGSZEICHENLISTE

- 1: Erdungsanker
- 2: armierter Stahlbeton
- 3: Stab
- 5: Spreizkörper
- 7: Spannhülse
- 8, 8': Distanzhülse
- 9: Mutter
- 20: Bohrung
- 21: Stahlbewehrung
- 28: Mündungsbereich
- 29: Wandfläche
- 31: Innensechskant
- 33: Außengewinde
- 50: Hülsenkörper
- 53: Innengewinde (Spreizkörper)
- 55: Außenkonus
- 70: Ringkörper
- 71: Schlitz
- 72a, 72b, 72c, 72d: Radialvorsprung
- 73: Außenumfang
- 75: Innenkonus
- 80: Durchgangsöffnung
- 81: Halteabschnitt
- 82: Profilierung, Rändelung
- 83: Keilabschnitt
- 84: Fußfläche
- 88: Zylinderabschnitt
- 89: Stirnfläche
- 91: Unterlegscheibe
- A: Axialrichtung
- D3: äußerer Stabdurchmesser
- D7: äußerer Spannhülsendurchmesser
- D8: Halteabschnitt-Durchmesser
- D9: minimaler Keilabschnitt-Durchmesser
- L: axiale Länge (Gesamtlänge)
- L5: erste Länge
- L7: zweite Länge
- L8: dritte Länge
- R: Radialrichtung
- w: Weite
- α: Außenkonuswinkel
- β: Innenkonuswinkel

## Patentansprüche

1. Erdungsanker (1) zum Einsetzen in armierten Stahlbeton (2), umfassend
einen Stab (3), der eine Axialrichtung (A) definiert,
eine den Stab (3) radial zur Axialrichtung (A) umgebende Spannhülse (7) mit einem Schlitz (71), der sich in der Axialrichtung (A) durch die Spannhülse (7) erstreckt, und einen an dem Stab (3) befestigten oder befestigbaren Spreizkörper (5) zum radialen Aufspreizen der Spannhülse (7).

2. Erdungsanker (1) nach Anspruch 1, **dadurch gekennzeichnet, dass** der Erdungsanker (1) ferner eine Distanzhülse (8, 8') umfasst, die den Stab (3) umgreift und einen außenumfänglichen Halteabschnitt (81) zum Fixieren der Distanzhülse (8, 8') an einer Wandinnenseite der Bohrung (20) aufweist, wobei die Spannhülse (7) zwischen der Distanzhülse (8, 8') und dem Spreizkörper angeordnet ist.

3. Erdungsanker (1) nach Anspruch 2, **dadurch gekennzeichnet, dass** der Halteabschnitt (81) für eine formschlüssige Verbindung und/oder eine Pressverbindung mit der Bohrung (20) ausgelegt und eingerichtet ist.

4. Erdungsanker (1) nach einem der vorstehenden Ansprüche , **dadurch gekennzeichnet, dass** der Schlitz (71) die Spannhülse (7) in der Axialrichtung (A) vollständig durchdringt, und/oder die Spannhülse (7) genau einen Schlitz (71) aufweist.

5. Erdungsanker (1) nach einem der vorstehenden Ansprüche, **dadurch gekennzeichnet, dass** die Spannhülse (7) wenigstens einen Radialvorsprung (72a, 72b, 72c, 72d) zum Eingreifen in den Stahlbeton (2) aufweist, der sich entlang des Außenumfangs (73) der Spannhülse (7) erstreckt, wobei der wenigstens eine Radialvorsprung (72a, 72b, 72c, 72d) unterbrechungsfrei einen Bogenwinkel um die Axialrichtung (A) von wenigstens 90° aufspannt.

6. Erdungsanker (1) nach Anspruch 4, **dadurch gekennzeichnet, dass** sich der wenigstens eine Radialvorsprung (72a, 72b, 72c, 72d) sich kontinuierlich und nur vom Schlitz (71) durchbrochen entlang des Außenumfangs (73) der Spannhülse (7) erstreckt.

7. Erdungsanker (1) nach einem der vorstehenden Ansprüche, **dadurch gekennzeichnet, dass** die Spannhülse (7) zwei oder mehr in der Axialrichtung (A) beabstandete Radialvorsprünge (72a, 72b, 72c, 72d) zum Eingreifen in den Stahlbeton (2) aufweist.

8. Erdungsanker (1) nach Anspruch 7, **dadurch gekennzeichnet, dass** die Spannhülse (7) genau zwei oder genau drei in der Axialrichtung (A) beabstandete Radialvorsprünge (72a, 72b, 72c, 72d) aufweist.

9. Erdungsanker (1) nach einem der vorstehenden Ansprüche, **dadurch gekennzeichnet, dass** der Stab (3) an einem ersten Ende ein mehrkantiges oder sternförmiges Schraubenmitnahmeprofil aufweist.

10. Erdungsanker (1) nach einem der vorstehenden Ansprüche, **dadurch gekennzeichnet, dass** der Stab (3) einen äußeren Stabdurchmesser (D3) aufweist, und die Spannhülse (7) in unverformtem Zustand einen äußeren Spannhülsendurchmesser (D7) aufweist, wobei das Verhältnis vom Stabdurchmesser (D3) zum Spannhülsendurchmesser (D7) wenigstens 0,60 beträgt.

11. Erdungsanker (1) zum Einsetzen in eine Bohrung (20) im armierten Stahlbeton (2) nach einem der vorstehenden Ansprüche, **dadurch gekennzeichnet, dass** der Erdungsanker (1) ferner eine Distanzhülse (8, 8') umfasst, die den Stab (3) umgreift und einen außenumfänglichen Halteabschnitt (81) zum Fixieren der Distanzhülse (8, 8') an einer Wandinnenseite der Bohrung (20) aufweist, wobei die Spannhülse (7) zwischen der Distanzhülse (8, 8') und dem Spreizkörper angeordnet ist.

12. Erdungsanker (1) nach Anspruch 11, **dadurch gekennzeichnet, dass** der Halteabschnitt (81) für eine formschlüssige Verbindung und/oder eine Pressverbindung mit der Bohrung (20) ausgelegt und eingerichtet ist.

13. Verfahren zum Montieren eines Erdungsankers (1) in armierten Stahlbeton (2), wobei ein Stab (3) mit einer den Stab (3) radial zur Axialrichtung (A) umgebenden Spannhülse (7) und einem Spreizkörper (5) zum radialen Aufspreizen der Spannhülse (7) bereitgestellt wird, wobei der Stab (3) mit dem Spreizkörper (5) und der Spannhülse (7) in ein Bohrloch (20) eingesetzt wird, wobei die Spannhülse (7), insbesondere mittels einer Mutter (9) und einer Distanzhülse (8, 8'), derart in der Axialrichtung (A) gegen den Spreizkörper (5) verspannt wird ist, dass der Spreizkörper (5) eine Aufweitung der Spannhülse (7) in Radialrichtung (R) gegen die Wandinnenseite der Bohrung (20) veranlasst.

14. Verfahren zum Montieren eines Erdungsankers (1) nach Anspruch 13, wobei der Stab (3) mit einer Distanzhülse (8, 8') bereitgestellt wird, die den Stab (3) umgreift, und wobei
der Stab (3) derart das Bohrloch (20) eingesetzt wird, dass die Distanzhülse (8, 8') im Wesentlichen mit einer Wandfläche des armierten Stahlbetons (2) fluchtet.

15. Verfahren zum Montieren eines Erdungsankers (1) nach Anspruch 13 oder 14, wobei der Stab (3) eingesetzt wird, bis der Stab (3) die Metallarmierung (21) kontaktiert, wobei ein Abstand von wenigstens 10 mm zwischen der Metallarmierung (21) und dem Spreizkörper (3) und/oder der Spannhülse (7) gewahrt bleibt.
